# EUROPEAN PATENT APPLICATION

(11) **EP 4 628 857 A1**
(43) Date of publication of application: **08.10.2025**
(21) Application number: 23906329.0
(22) Date of filing: 10.07.2023
(51) Int. Cl.: G01J 1/02, H01J 31/50

(54) **STREAK TUBE**

(30) Priority: 19.12.2022 JP 2022201991
(71) Applicant: Hamamatsu Photonics K.K., Hamamatsu-shi, Shizuoka 435-8558 (JP)
(72) Inventor: ISHIHARA Yoshitoshi, Hamamatsu-shi, Shizuoka 435-8558 (JP); TAMURA Haruki, Hamamatsu-shi, Shizuoka 435-8558 (JP)
(74) Representative: Grünecker Patent- und Rechtsanwälte PartG mbB
(86) International application number: PCT/JP2023/025468
(87) International publication number: WO 2024/134945

(57) **Abstract**

A streak tube of an embodiment includes a container including an incident panel and an output panel, a photocathode, a sweep electrode, a plurality of electrodes provided between the photocathode and the sweep electrode and forming an electron lens that focuses the electrons, each of the plurality of electrodes being provided with an opening portion through which the electrons pass, and a controller configured to control a potential applied to at least one of the plurality of electrodes. The plurality of electrodes include a first electrode disposed at a position closest to the incident panel, a second electrode disposed at a position closest to the output panel, and a third electrode disposed between the first electrode and the second electrode to be spaced apart from the first electrode and the second electrode. The controller applies a potential higher than a potential of the first electrode and a potential of the second electrode to the third electrode.

## Description

### Technical Field

The present disclosure relates to a streak tube.

### Background Art

As a device for capturing a phenomenon that occurs in a short time with light, a streak tube (for example, see Patent Literature 1) is known. The streak tube disclosed in Patent Literature 1 has a structure in which three additional electrodes forming a one-dimensional focusing lens are disposed along a tube axis direction between an electron focusing system that focuses electrons generated on a photocathode and a sweep electrode. In this streak tube, in order to improve temporal resolution, a ground potential (0 V) is applied to a first additional electrode and a third additional electrode disposed on both outer sides of the three additional electrodes, and a negative potential (for example, - 350 V or -500 V) is applied to a second additional electrode disposed between the first additional electrode and the third additional electrode.

### Citation List

### Patent Literature

[Patent Literature 1] Japanese Patent No. 5824328

### Summary of Invention

### Technical Problem

In recent years, there has been an increasing demand for ultrahigh-speed optical measurement for capturing a light emission phenomenon occurring in an extremely short time in various fields such as a high-energy field (for example, a field of research on high-energy accelerator electron beams and development of ultra-short pulse light sources) and a scientific measurement field (for example, a field of measurement of molecular dynamics in material development research). That is, there is a demand for further improvement in temporal resolution in the above-described streak tube (for example, a configuration that performs a synchronous scan sweep in which the temporal resolution tends to deteriorate).

An object of one aspect of the present disclosure is to provide a streak tube capable of effectively improving temporal resolution.

### Solution to Problem

According to the present disclosure, there is provided streak tubes described in [1] to [10] below.
[1] A streak tube including
   a container including an incident panel and an output panel,
   a photocathode provided in the container and configured to emit electrons in response to light to be measured incident from the incident panel,
   a sweep electrode provided in the container and including a pair of plate-shaped electrodes facing each other in a sweep direction along the output panel, the sweep electrode being configured to deflect the electrons in the sweep direction,
   a plurality of electrodes provided between the photocathode and the sweep electrode and forming an electron lens that focuses the electrons, each of the plurality of electrodes being provided with an opening portion through which the electrons pass, and
   a controller configured to control a potential applied to at least one of the plurality of electrodes,
   in which the plurality of electrodes include a first electrode disposed at a position closest to the incident panel, a second electrode disposed at a position closest to the output panel, and a third electrode disposed between the first electrode and the second electrode to be spaced apart from the first electrode and the second electrode, and
   the controller applies a potential higher than a potential of the first electrode and a potential of the second electrode to the third electrode.

In the streak tube, a potential higher than the potential of the first electrode and the potential of the second electrode is applied to the third electrode disposed inside the first electrode and the second electrode located at both end portions of the plurality of electrodes forming the electron lens. Here, in a case where a potential lower than the potentials of the first electrode and the second electrode is applied to the third electrode, an electron deceleration region for decelerating a speed of the electrons is formed near the opening portion of the third electrode on an electron-incident side. On the other hand, in the streak tube in which a potential higher than the potentials of the first electrode and the second electrode is applied to the third electrode, formation of the electron deceleration region can be suppressed, and the electrons passing near the opening portion of the third electrode on the electron-incident side can be accelerated. Further, in an electron group passing through the electron lens, an electron passing through a trajectory away from a center plane of the electron lens more strongly receives an acceleration action due to a potential difference. As a result, it is possible to reduce a speed difference between the electrons of the electron group after passing through the electron lens (that is, a difference in arrival time at the sweep electrode), which is caused by the electron group passing through the electron lens. Therefore, with the streak tube, it is possible to effectively improve the temporal resolution.

[2] The streak tube according to [1], in which the first electrode is at the same potential as the second electrode.

By setting the first electrode and the second electrode to be at the same potential, it is possible to more effectively improve the temporal resolution.

[3] The streak tube according to [1] or [2], further including
a first slit member provided between the electron lens and the sweep electrode and including a first slit having a width smaller than a width of the opening portion of each of the plurality of electrodes in the sweep direction,
in which the controller controls a potential applied to the sweep electrode, at a start of sweeping by the sweep electrode, to apply a positive potential to a first plate-shaped electrode, which is one of the pair of plate-shaped electrodes, and to apply a negative potential to a second plate-shaped electrode, which is the other of the pair of plate-shaped electrodes, and
a center of the first slit in the sweep direction is disposed at a position spaced apart from a center plane passing through a center of the electron lens and orthogonal to the sweep direction toward a side on which the first plate-shaped electrode is positioned.

A region on the electron-incident side in a region between the first plate-shaped electrode and the second plate-shaped electrode, on a side on which the second plate-shaped electrode is positioned with respect to the center plane, is a deceleration region in which the electrons are likely to be decelerated because a negative electric field is generated at the start of sweeping. On the other hand, a region on the electron-incident side in a region between the first plate-shaped electrode and the second plate-shaped electrode, on a side on which the first plate-shaped electrode is positioned with respect to the center plane, is an acceleration region in which the electrons are likely to be accelerated because a positive electric field is generated at the start of sweeping. With the above-described configuration, it is possible to block a part of the electron group moving toward the deceleration region (that is, the electron passing through a peripheral portion spaced apart from the center plane on the side on which the second plate-shaped electrode is positioned) in the electron group that has passed through the electron lens, and reduce the number of electrons entering the deceleration region. As a result, it is possible to suppress a variation in speed and traveling direction (angle) of the electron group entering between the first plate-shaped electrode and the second plate-shaped electrode. As a result, it is possible to suppress spatial spreading of the electron group reaching the output panel in the sweep direction (time direction), and improve the temporal resolution.

[4] The streak tube according to [3], in which the first slit member is at the same potential as the second electrode.

By setting the first slit member and the second electrode to be at the same potential, it is possible to more effectively improve the temporal resolution.

[5] The streak tube according to any one of [1] to [4], further including
a second slit member provided between the electron lens and the incident panel and including a second slit having a width smaller than a width of the opening portion of each of the plurality of electrodes in the sweep direction,
in which the controller controls a potential applied to the sweep electrode, at a start of sweeping by the sweep electrode, to apply a positive potential to a first plate-shaped electrode, which is one of the pair of plate-shaped electrodes, and to apply a negative potential to a second plate-shaped electrode, which is the other of the pair of plate-shaped electrodes, and
a center of the second slit in the sweep direction is disposed at a position spaced apart from a center plane passing through a center of the electron lens and orthogonal to the sweep direction toward a side on which the second plate-shaped electrode is positioned.

With the above-described configuration, it is possible to block a part of the electron group passing through the peripheral portion spaced apart from the center plane on the side on which the first plate-shaped electrode is positioned among the electron groups incident on the electron lens. As a result, it is possible to suppress the variation in speed and traveling direction (angle) (that is, a variation in arrival time at the sweep electrode) of the electron group entering between the first plate-shaped electrode and the second plate-shaped electrode, which is caused by the electron group passing through the electron lens. As a result, it is possible to suppress spatial spreading of the electron group reaching the output panel in the sweep direction (time direction), and improve the temporal resolution.

[6] The streak tube according to [5], further including
an aperture electrode provided between the second slit member and the incident panel and including an opening through which the electrons pass,
in which the second slit member is at the same potential as at least one of the aperture electrode and the first electrode.

By setting the second slit member to be at the same potential as at least one of the aperture electrode and the first electrode, it is possible to more effectively improve the temporal resolution.

[7] The streak tube according to any one of [1] to [6],
in which the incident panel includes a light incident surface on which the light to be measured is incident and a photocathode forming surface that is positioned on a side opposite to the light incident surface and on which the photocathode is formed, and
the photocathode forming surface is formed in a curved shape recessed toward a side of the light incident surface.

With the above-described configuration, it is possible to reduce a distance difference between a focal point of electrons emitted from a position close to a center of the photocathode and a focal point of electrons emitted from a position away from the center of the photocathode in a traveling direction of the electrons (that is, a direction from the incident panel toward the output panel). As a result, it is possible to improve resolution (spatial resolution) in a spatial direction (a direction orthogonal to the sweep direction and the traveling direction of the electrons) due to a difference in electron emitted position on the photocathode (that is, a difference in incidence position of the light to be measured on the photocathode).

[8] The streak tube according to any one of [1] to [7],
in which the controller controls a potential applied to the sweep electrode, at a start of sweeping by the sweep electrode, to apply a positive potential to a first plate-shaped electrode, which is one of the pair of plate-shaped electrodes, and to apply a negative potential to a second plate-shaped electrode, which is the other of the pair of plate-shaped electrodes, and
a distance between an end portion closest to the incident panel in an inner side surface of the first plate-shaped electrode that faces a center plane passing through a center of the electron lens and orthogonal to the sweep direction and the center plane is shorter than a distance between an end portion closest to the incident panel in an inner side surface of the second plate-shaped electrode that faces the center plane and the center plane.

With the above-described configuration, it is possible to suitably induce the electron group that has passed through the electron lens to a region (acceleration region) near the first plate-shaped electrode to which a positive potential is applied at the start of sweeping, and reduce the number of electrons incident on a region (deceleration region) near the second plate-shaped electrode to which a negative potential is applied at the start of sweeping. As a result, the variation in arrival time of the electrons at the sweep electrode, which is caused by the electron group passing through the electron lens, is reduced. As a result, it is possible to more effectively improve the temporal resolution.

[9] The streak tube according to any one of [1] to [8], in which the pair of plate-shaped electrodes are traveling wave type electrodes configured such that the applied potential changes in synchronization with a traveling speed of the electrons between the pair of plate-shaped electrodes.

With the above-described configuration, a potential propagating between the sweep electrodes can be applied in accordance with the speed of the electrons passing between the sweep electrodes. As a result, since more precise sweep control of the electron group can be performed, the temporal resolution can be more effectively improved.

[10] A streak tube including
a container including an incident panel and an output panel,
a photocathode provided in the container and configured to emit electrons in response to light to be measured incident from the incident panel,
a sweep electrode provided in the container and including a pair of plate-shaped electrodes facing each other in a sweep direction along the output panel, the sweep electrode being configured to deflect the electrons in the sweep direction,
a plurality of electrodes provided between the photocathode and the sweep electrode and forming an electron lens that focuses the electrons, each of the plurality of electrodes being provided with an opening portion through which the electrons pass,
a controller configured to control a potential applied to the sweep electrode and a potential applied to at least one of the plurality of electrodes,
a first slit member provided between the electron lens and the sweep electrode and having a first slit having a width smaller than a width of the opening portion of each of the plurality of electrodes in the sweep direction, and
a second slit member provided between the electron lens and the incident panel and having a second slit having a width smaller than a width of the opening portion of each of the plurality of electrodes in the sweep direction,
in which the controller controls a potential applied to the sweep electrode, at a start of sweeping by the sweep electrode, to apply a positive potential to a first plate-shaped electrode, which is one of the pair of plate-shaped electrodes, and to apply a negative potential to a second plate-shaped electrode, which is the other of the pair of plate-shaped electrodes,
a center of the first slit in the sweep direction is disposed at a position spaced apart from a center plane passing through a center of the electron lens and orthogonal to the sweep direction toward a side on which the first plate-shaped electrode is positioned, and
a center of the second slit in the sweep direction is disposed at a position spaced apart from the center plane toward a side on which the second plate-shaped electrode is positioned.

With the above-described configuration, it is possible to obtain both the effects of [3] and [5] described above, and thus it is possible to effectively improve the temporal resolution.

### Advantageous Effects of Invention

According to one aspect of the present disclosure, it is possible to provide a streak tube capable of effectively improving temporal resolution.

### Brief Description of Drawings

Fig. 1 is a cross-sectional view schematically showing a structure of a streak tube according to a first embodiment.
Fig. 2 is a perspective cross-sectional view schematically showing a part of an aperture electrode, a second slit member, a one-dimensional electron lens, and a first slit member in the streak tube of Fig. 1.
Fig. 3 is a diagram showing an example of a sweep voltage applied to a sweep electrode of the streak tube of Fig. 1.
Fig. 4 is a diagram schematically showing an effect of a one-dimensional electron lens of each of a comparative example and an example.
Fig. 5 is a diagram schematically showing an effect of a photocathode of each of the comparative example and the example.
Fig. 6 is a diagram schematically showing an effect of a photocathode of each of the comparative example and the example.
Fig. 7 is a cross-sectional view schematically showing a modification example of the one-dimensional electron lens.
Fig. 8 is a cross-sectional view schematically showing a structure of a streak tube according to a second embodiment.
Fig. 9 is a perspective cross-sectional view schematically showing a part of an aperture electrode, a second slit member, a one-dimensional electron lens, and a first slit member in the streak tube of Fig. 8.
Fig. 10 is a diagram schematically showing a result of a temporal resolution analysis of a streak tube of the comparative example.
Fig. 11 is a diagram schematically showing a result of a temporal resolution analysis of a streak tube of a first example.
Fig. 12 is a diagram schematically showing a result of a temporal resolution analysis of a streak tube of a second example.
Fig. 13 is a diagram showing measurement results of temporal resolutions of the streak tube of the first example and the streak tube of the second example.
Fig. 14 is a diagram schematically showing a first modification example and a second modification example of the sweep electrode.
Fig. 15 is a diagram schematically showing a third modification example of the sweep electrode.
Fig. 16 is a diagram schematically showing a modification example of a main focus electrode.

### Description of Embodiments

Hereinafter, an embodiment of the present disclosure will be described in detail with reference to the drawings. In the following description, the same or corresponding elements are denoted by the same reference numerals, and the redundant descriptions are omitted.

### [First Embodiment]

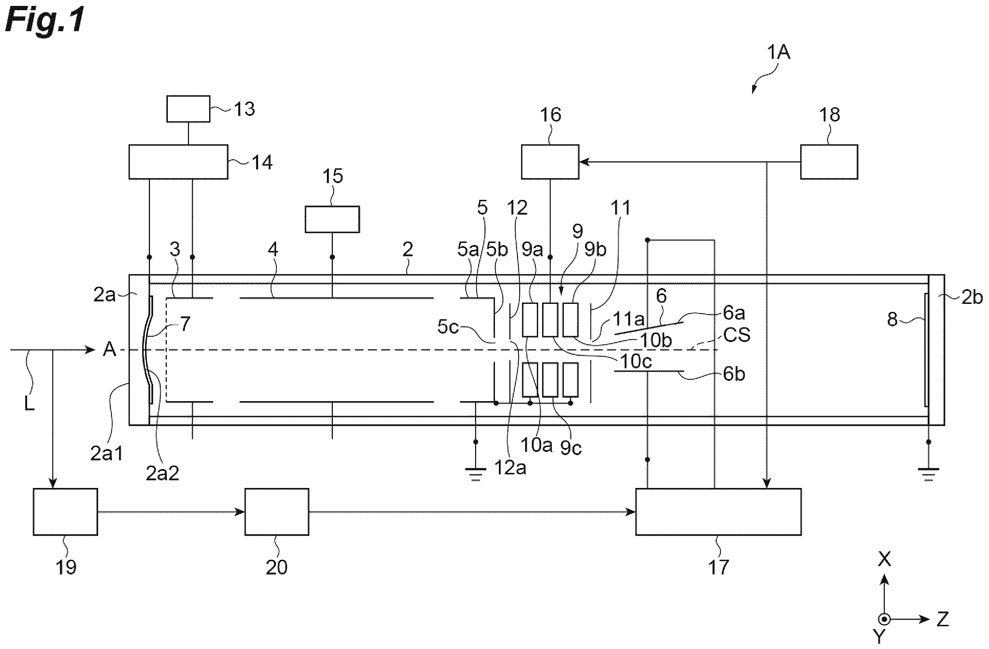

A streak tube 1A according to a first embodiment will be described with reference to Figs. 1 to 7. Fig. 1 is a cross-sectional view of the streak tube 1A along a plane including a tube axis A and perpendicular to a sweep plate (plate-shaped electrodes 6a and 6b) of a sweep electrode 6. As shown in Fig. 1, the streak tube 1A includes a container 2, a mesh electrode 3, a main focus electrode 4, an aperture electrode 5, a sweep electrode 6, a photocathode 7, a phosphor screen 8, a one-dimensional electron lens 9, a first slit member 11, a second slit member 12, a high-voltage power supply 13, a voltage divider circuit 14, a main focus electrode voltage source 15, a third electrode voltage source 16, a sweep voltage generation unit 17, a setting signal generation unit 18 (controller), a PIN photodiode 19, and a delay circuit 20.

The container 2 is formed in a cylindrical shape. The tube axis A of the above-described streak tube 1A is a central axis of the container 2. An incident panel 2a consisting of a light-transmissive material on which measured light L (light to be measured) is incident is fixed to one end surface of the container 2 in a direction along the tube axis A. The incident panel 2a has a light incident surface 2a1 on which the measured light L is incident, and a photocathode forming surface 2a2 that is positioned on a side opposite to the light incident surface 2a1. An output panel 2b consisting of a light-transmissive material through which an output image is emitted is fixed to the other end surface of the container 2 in the direction along the tube axis A. In the following description, a direction along the tube axis A of the container 2 is referred to as a Z-axis direction, a direction in which the plate-shaped electrode 6a (first plate-shaped electrode) and the plate-shaped electrode 6b (second plate-shaped electrode) of the sweep electrode 6 face each other and which is orthogonal to the Z-axis direction (sweep direction) is referred to as an X-axis direction, and a direction orthogonal to the Z-axis direction and the X-axis direction (spatial direction) is referred to as a Y-axis direction.

Inside the container 2, the photocathode forming surface 2a2, which is an inner surface of the incident panel 2a, is formed in a curved shape recessed toward the light incident surface 2a1 side, and the photocathode 7 is provided thereon. In other words, the photocathode 7 formed in a curved shape protruding from the output panel 2b toward the incident panel 2a is provided on the photocathode forming surface 2a2. As an example, the photocathode forming surface 2a2 is provided with a curved recess portion, and the photocathode 7 is formed in a curved shape along the recess portion and has a substantially constant thickness in the Z-axis direction. The photocathode 7 has a shape that is rotationally symmetric (axisymmetric) with respect to the tube axis A. For example, an incident surface (surface facing the incident panel 2a (photocathode forming surface 2a2)) and an exit surface (surface facing the output panel 2b) of the photocathode 7 may be formed in a spherical shape or a parabolic shape. The photocathode 7 is a so-called transmission-type photoelectric cathode, and emits electrons (photoelectrons) toward the phosphor screen 8 (output panel 2b) in response to the measured light L incident from the incident panel 2a. Inside the container 2, the phosphor screen 8 is provided on an inner surface of the output panel 2b. The phosphor screen 8, in response to incident electrons emitted by photocathode 7, emits externally an output image (streak image) corresponding to an incidence distribution of the incident electrons.

The mesh electrode 3 is an electrode for accelerating an electron beam, having a shape in which an end portion of a cylindrical electrode on a photocathode 7 side is covered with a mesh-like electrode. A central axis of the mesh electrode 3 substantially coincides with the tube axis A of the container 2. The mesh electrode 3 is disposed adjacent to the photocathode 7 inside the container 2. The mesh electrode 3 is disposed such that, in a case where a linear optical image along the Y-axis direction is incident on the incident panel 2a, an angle between the optical image and the mesh is substantially 45 degrees, that is, the mesh forms a 45-degree angle with respect to the X-axis (Y-axis). Accordingly, moire in the output image can be prevented. The mesh interval is set, for example, to 1,000 lines/inch.

The main focus electrode 4 is an axisymmetric cylindrical electrode. A central axis of the main focus electrode 4 substantially coincides with the tube axis A of the container 2. The main focus electrode 4 is disposed adjacent to the mesh electrode 3 inside the container 2. The main focus electrode 4 is disposed between the mesh electrode 3 and the aperture electrode 5.

The aperture electrode 5 is disposed adjacent to the main focus electrode 4 on a side opposite to a side on which the mesh electrode 3 is positioned with respect to the main focus electrode 4. The aperture electrode 5 has a cylindrical electrode 5a having a central axis that substantially coincides with the tube axis A, and a disk-shaped electrode 5b formed at an end portion of the cylindrical electrode 5a on a phosphor screen 8 side. An aperture 5c (opening), through which electrons pass, is provided at a central portion of the disk-shaped electrode 5b.

The mesh electrode 3, the main focus electrode 4, and the aperture electrode 5 are a cylindrical electrode group (electron focusing system) that forms an axially symmetric electron lens for focusing the electrons emitted from the photocathode 7 toward the phosphor screen 8. In order to realize such an electron focusing system, a predetermined negative potential (for example, -3 kV) is applied to the photocathode 7, a predetermined positive potential (for example, +3 kV) is applied to the mesh electrode 3, a high potential having a positive polarity is applied to the main focus electrode 4, and a ground potential (0 V) is applied to the aperture electrode 5 and the phosphor screen 8. As a result, a twodimensional electron lens (lens symmetric with respect to the tube axis A of the container 2) for focusing the electron beam accelerated in the Z-axis direction by the mesh electrode 3 onto the phosphor screen 8 is formed between the mesh electrode 3 and the main focus electrode 4 and between the main focus electrode 4 and the aperture electrode 5. A magnitude of the potential applied to the main focus electrode 4 can be adjusted such that the electron beam is optimally focused on the phosphor screen 8. An inner diameter of a cylindrical portion of the mesh electrode 3, the main focus electrode 4, and the aperture electrode 5 is, for example, 20 mm.

The one-dimensional electron lens 9 (electron lens) focuses the electrons that have passed through the aperture electrode 5 and a slit 12a of a second slit member 12, which will be described below, in the X-axis direction. That is, the one-dimensional electron lens 9 is configured to focus the electrons on a plane (center plane CS) including the tube axis A and perpendicular to the X-axis.

The sweep electrode 6 has a pair of plate-shaped electrodes (plate-shaped electrodes 6a and 6b) facing each other in the sweep direction (X-axis direction) along the output panel 2b. The plate-shaped electrodes 6a and 6b face each other in the X-axis direction with the center plane CS interposed therebetween. As shown in Fig. 1, as an example, the plate-shaped electrode 6a is disposed so as to be inclined with respect to the center plane CS such that the plate-shaped electrode 6a becomes increasingly distant from the center plane CS from the incident panel 2a toward the output panel 2b. The plate-shaped electrode 6b is disposed in parallel to the center plane CS. A sweep voltage is applied to the plate-shaped electrodes 6a and 6b, whereby an electron group passing through the sweep electrode 6 is swept in the X-axis direction.

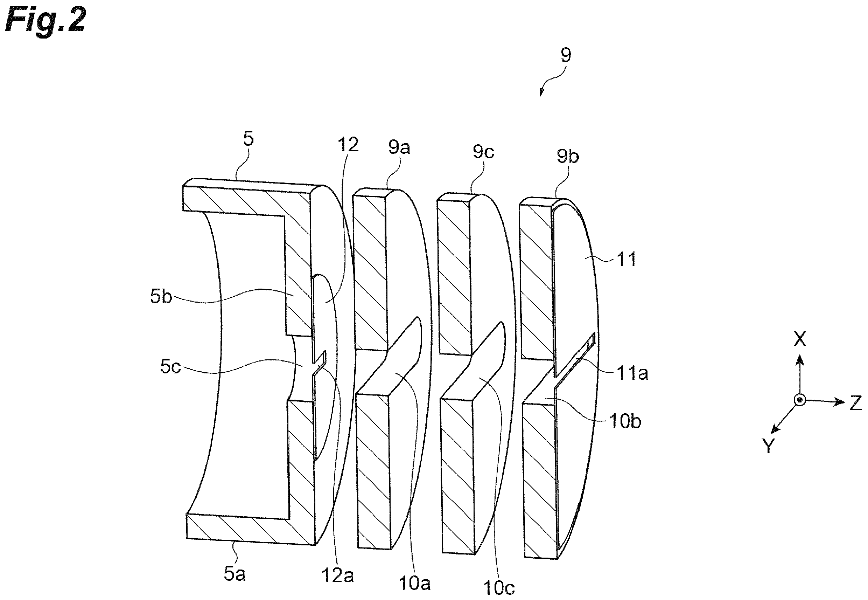

Fig. 2 is a perspective cross-sectional view schematically showing the aperture electrode 5, the second slit member 12, the one-dimensional electron lens 9, and the first slit member 11. As shown in Figs. 1 and 2, the second slit member 12, the one-dimensional electron lens 9, and the first slit member **11** are disposed in this order between the aperture electrode 5 and the sweep electrode 6.

As shown in Fig. 2, the one-dimensional electron lens 9 has a plurality (three in the present embodiment) of disk-shaped electrodes (a first electrode 9a, a second electrode 9b, and a third electrode 9c). The first electrode 9a is disposed at a position closest to the incident panel 2a. The second electrode 9b is disposed at a position closest to the output panel 2b. The third electrode 9c is disposed between the first electrode 9a and the second electrode 9b so as to be spaced apart from the first electrode 9a and the second electrode 9b. The first electrode 9a, the second electrode 9b, and the third electrode 9c are disposed so as to be spatially separated from one another in the Z-axis direction (the direction along the tube axis A of the container 2) while being arranged along the output panel 2b.

The first electrode 9a is provided with an opening portion 10a penetrating in the Z-axis direction. When viewed from the Z-axis direction, the opening portion 10a has an elongated shape extending in the Y-axis direction (direction perpendicular to the sweep direction) in a substantially central portion (that is, a region including the center plane CS) of the first electrode 9a in the sweep direction (X-axis direction). The second electrode 9b and the third electrode 9c are also provided with opening portions 10b and 10c similar to the opening portion 10a of the first electrode 9a. The centers of the opening portions 10a, 10b, and 10c are positioned on the tube axis A of the container 2.

From the viewpoint of efficiently operating the one-dimensional electron lens 9, a magnification of a length of the opening portions 10a, 10b, and 10c in the Y-axis direction to a width of the opening portions 10a, 10b, and 10c in the X-axis direction is preferably three times or more. When the magnification of the opening portions 10a, 10b, and 10c is three times or more, it is possible to prevent an unnecessary electron lens effect in the Y-axis direction from occurring due to the potential at both ends of the opening portions 10a, 10b, and 10c in the length direction (Y-axis direction). For example, a thickness (length in the Z-axis direction) of each of the first electrode 9a, the second electrode 9b, and the third electrode 9c is set to 3 mm, an opening width (width in the X-axis direction) of each of the opening portions 10a, 10b, and 10c is set to 4 mm, a length of each of the opening portions 10a, 10b, and 10c in the Y-axis direction is set to 25 mm, and a spacing between the first electrode 9a, the second electrode 9b, and the third electrode 9c is set to 3 mm. In addition, both end portions of the opening portions 10a, 10b, and 10c in the Y-axis direction may be formed in an arc shape as shown in Fig. 2 or may be formed in a straight shape.

The first slit member 11 is provided on a downstream side of the one-dimensional electron lens 9 in a traveling direction (Z-axis positive direction) of the electrons. That is, the first slit member 11 is provided between the one-dimensional electron lens 9 and the sweep electrode 6. In the present embodiment, as an example, the first slit member 11 is provided so as to be in contact with an outer surface (surface facing the phosphor screen 8) of the second electrode 9b. That is, the first slit member 11 and the second electrode 9b are electrically connected to each other and are at the same potential. In addition, the first slit member 11 is formed in a disk shape. The first slit member 11 has a slit 11a (first slit) penetrating in the Z-axis direction. A center of the slit 11a in the sweep direction is positioned on the tube axis A, similarly to the centers of the opening portions 10a, 10b, and 10c. The first slit member 11 is formed of, for example, a metal material such as stainless steel or aluminum.

The second slit member 12 is provided on an upstream side of the one-dimensional electron lens 9 in the traveling direction of the electrons. That is, the first slit member 11 is provided between the one-dimensional electron lens 9 and the incident panel 2a (more specifically, between the first electrode 9a and the aperture electrode 5). In the present embodiment, as an example, the second slit member 12 is provided so as to be in contact with an outer surface (surface facing the phosphor screen 8) of the disk-shaped electrode 5b of the aperture electrode 5. That is, the second slit member 12 and the aperture electrode 5 are electrically connected to each other and are at the same potential. In addition, the second slit member 12 is formed in a disk shape similarly to the first slit member 11. The second slit member 12 has a slit 12a (second slit) penetrating in the Z-axis direction. A center of the slit 12a in the sweep direction is positioned on the tube axis A, similarly to the centers of the opening portions 10a, 10b, and 10c. The second slit member 12 is formed of, for example, a metal material such as stainless steel or aluminum.

A width of the slit 11a in the sweep direction (X-axis direction) is preferably 0.5 mm to 1.5 mm, and is, for example, 0.8 mm in the present embodiment. A width of the slit 12a in the sweep direction (X-axis direction) is preferably 0.8 mm to 1.5 mm, and is, for example, 1.2 mm in the present embodiment. That is, the widths of the slits 11a and 12a in the sweep direction (X-axis direction) are smaller than the widths of the opening portions 10a, 10b, and 10c of the plurality of electrodes (the first electrode 9a, the second electrode 9b, and the third electrode 9c) in the sweep direction. In addition, the width of the slit 11a in the sweep direction is preferably equal to or less than the width of the slit 12a in the sweep direction, and in the present embodiment, the width of the slit 11a in the sweep direction is less than the width of the slit 12a in the sweep direction. The slit 11a blocks a part of the electron group that has passed through the one-dimensional electron lens 9 and narrows a range of the electron group moving toward the sweep electrode 6. The slit 12a blocks a part of the electron group that has passed through the aperture 5c of the aperture electrode 5 and narrows a range of the electron group moving toward the one-dimensional electron lens 9.

Next, a voltage control system of the streak tube 1A will be described with reference to Fig. 1 again. The first electrode 9a and the second electrode 9b are electrically connected to each other inside the container 2 and are electrically connected to the aperture electrode 5. That is, the first electrode 9a, the second electrode 9b, and the aperture electrode 5 are at the same potential. In addition, the third electrode 9c is configured such that an arbitrary potential Vc can be applied from the outside.

The aperture electrode 5 and the phosphor screen 8 are set to 0 V by applying the ground potential thereto (grounding). As a result, the potentials of the first electrode 9a and the second electrode 9b are set to 0 V. At the same time, a voltage generated by the high-voltage power supply 13 is divided by the voltage divider circuit 14, so that a potential of -3 kV is applied to the photocathode 7 and a potential of +3 kV is applied to the mesh electrode 3. In addition, the main focus electrode voltage source 15 is connected to the main focus electrode 4, and a high voltage of a positive polarity is applied from the main focus electrode voltage source 15 to the main focus electrode 4. Further, the third electrode voltage source 16 is connected to the third electrode 9c of the one-dimensional electron lens 9, and the predetermined potential Vc is applied from the third electrode voltage source 16 to the third electrode 9c. The voltages output by the main focus electrode voltage source 15 and the third electrode voltage source 16 are adjustable.

The sweep voltage generation unit 17 is connected to the plate-shaped electrodes 6a and 6b of the sweep electrode 6. The sweep voltage generation unit 17 supplies sweep voltages Vd1(t) and Vd2(t) of opposite polarities (push-pull) to the plate-shaped electrodes 6a and 6b, respectively. The sweep voltages Vd1(t) and Vd2(t) are voltages that change over time and are set to have opposite polarities with each other. In the present embodiment, the setting signal generation unit 18 described below is configured to apply a positive potential to the plate-shaped electrode 6a and apply a negative potential to the plate-shaped electrode 6b at a start of sweeping by the sweep electrode 6.

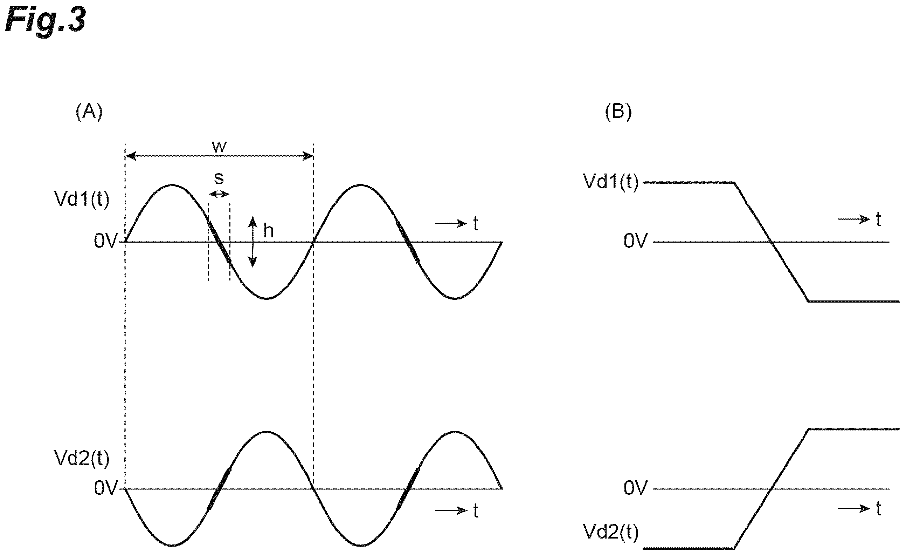

Fig. 3 is a diagram showing an example of the sweep voltage applied to the sweep electrode 6. (A) of Fig. 3 shows an example of the sweep voltages Vd1(t) and Vd2(t) in a synchronous scan method. As shown in (A) of Fig. 3, when the streak tube 1A is operated in the synchronous scan method, the sweep voltages Vd1(t) and Vd2(t), which are sinusoidal high-frequency voltages having a high frequency (for example, about 50 to 200 MHz), are applied to the plate-shaped electrodes 6a and 6b. As shown in (A) of Fig. 3, the Vd1(t) and Vd2(t) are shifted by a half wavelength (1/2 of a wavelength w) and have opposite phases. For example, in a case of observing light that repeatedly occurs at a high speed, in the above-described synchronous scan method, by synchronizing a sweep frequency with the repetition of the measured light, the streak images can be superimposed (integrated) on the same position on the phosphor screen 8. As a result, even a weak luminescence can be measured with a high S/N ratio. In the example of (A) of Fig. 3, the sweep voltages Vd1(t) and Vd2(t) are set by the setting signal generation unit 18 described below such that the electron group passes through the sweep electrode 6 at timings before and after the polarities of the Vd1(t) and Vd2(t) are switched (a time interval s and a potential fluctuation width h in (A) of Fig. 3). On the other hand, as shown in (B) of Fig. 3, when the streak tube 1A is operated in a single sweep method, the sweep voltages Vd1(t) and Vd2(t) may be controlled to change only once in a linear shape.

The setting signal generation unit 18 is connected to the third electrode voltage source 16 and the sweep voltage generation unit 17. A voltage value output by the third electrode voltage source 16 and a period, a slope, and the like of the sweep voltage generated by the sweep voltage generation unit 17 can be changed by a signal from the setting signal generation unit 18. That is, the setting signal generation unit 18 controls the potential applied to the sweep electrode 6 and the potential applied to at least one (third electrode 9c) of the one-dimensional electron lens 9 (plurality of electrodes). The setting signal generation unit 18 sets a voltage value applied to the third electrode 9c of the one-dimensional electron lens 9 in conjunction with a change in the sweep voltage, and outputs a set value indicating each of a parameter related to the change in the sweep voltage (for example, a frequency in a case of the above-described synchronous scan method, a slope of a voltage that changes in a linear shape in a case of the single sweep method, and the like) and the voltage value applied to the third electrode 9c to the sweep voltage generation unit 17 and the third electrode voltage source 16, respectively.

The PIN photodiode 19 on the outside of the container 2 detects the incidence of the measured light L and generates a trigger signal. The delay circuit 20 delays the trigger signal generated by the PIN photodiode 19 and outputs the trigger signal to the sweep voltage generation unit 17. The sweep voltage generation unit 17 applies the sweep voltages Vd1(t) and Vd2(t) to the sweep electrode 6 in accordance with a timing of occurrence of the trigger signal. With the PIN photodiode 19 and the delay circuit 20, the streak tube 1A is configured to enable the application of the sweep voltage to the sweep electrode 6 in accordance with the timing at which the electron group generated on the photocathode 7 in response to the incidence of the measured light L passes through the sweep electrode 6.

Next, an example of the operation of the streak tube 1A will be described. First, in a state where the ground potential (Va = Vb = 0 kV) is applied to the plate-shaped electrodes 6a and 6b of the sweep electrode 6 and the first electrode 9a and the second electrode 9b of the one-dimensional electron lens 9, and the potential Vc, which is a potential within a range of +600 V to +1 kV (in the present embodiment, +700 V), is applied to the third electrode 9c, an image of the measured light L is formed on the incident panel 2a through a half mirror, a slit plate, and an optical lens (not shown), thereby causing a linear optical image along the Y-axis direction is incident on the photocathode 7. In this case, by adjusting an output potential of the main focus electrode voltage source 15 to a predetermined potential (in the present embodiment, +7 kV) within a range of +6 kV to +10 kV, a stationary linear optical image on the phosphor screen 8 can be obtained in a focused state. Since the electron lens formed by the main focus electrode 4 is an axially symmetric electron lens, the electron group is focused in a direction perpendicular to a line direction of the linear optical image (sweep direction, X-axis direction) and in the line direction (spatial direction, Y-axis direction) as well.

Next, in a case where the sweep voltage is generated by the sweep voltage generation unit 17 to deflect the electron group on the phosphor screen 8, a brightness distribution (streak image) corresponding to a temporal change in intensity of the linear optical image is obtained on the phosphor screen 8. In this case, the setting signal generation unit 18 controls the sweep voltage generation unit 17 so that an optimal sweep voltage corresponding to a sweep speed is applied to the plate-shaped electrodes 6a and 6b.

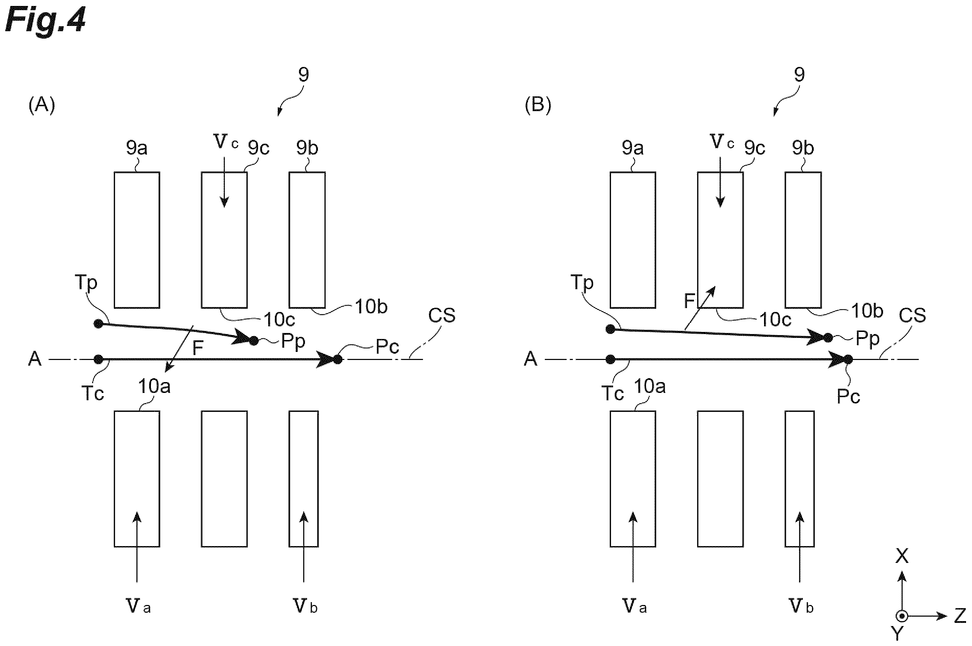

Fig. 4 is a diagram schematically showing an effect of a one-dimensional electron lens in each of the comparative example and the example (embodiment). (A) of Fig. 4 schematically shows a cross section of the one-dimensional electron lens 9 in the streak tube of the comparative example along an XZ plane including the tube axis A. (B) of Fig. 4 schematically shows a cross section of the one-dimensional electron lens 9 in the example (that is, the streak tube having the configuration of the streak tube 1A according to the present embodiment) along the XZ plane including the tube axis A.

In the comparative example shown in (A) of Fig. 4, a potential Vc lower than the potential Va of the first electrode 9a and the potential Vb of the second electrode 9b is applied to the third electrode 9c. For example, consider the case in which the potentials Va and Vb applied to the first electrode 9a and the second electrode 9b are set to the ground potential (0 V) and the potential applied to the third electrode 9c is set to a negative potential (for example, -350 V, -500 V, and the like).

In Fig. 4, a center trajectory Tc indicates a trajectory (projection onto the XZ plane including the tube axis A) of an electron that reaches the one-dimensional electron lens 9 by passing through the center plane CS along the tube axis A among the electron group generated on the photocathode 7 in response to the incidence of the measured light L. A peripheral trajectory Tp indicates a trajectory (projection onto the XZ plane including the tube axis A) of an electron among the above-mentioned electron group that reaches the one-dimensional electron lens 9 by passing through the peripheral portion spaced apart from the center plane CS. A position Pc indicates a position of the electron at time t immediately after the electron moving along the center trajectory Tc passes through the opening portion 10b of the one-dimensional electron lens 9 (second electrode 9b). A position Pp indicates a position of the electron at time t when the electron moves along the peripheral trajectory Tp.

In the comparative example shown in (A) of Fig. 4, as described above, a negative potential Vc lower than the potentials Va and Vb applied to the first electrode 9a and the second electrode 9b is applied to the third electrode 9c. Therefore, an electron deceleration region is formed near the opening portion 10c of the third electrode 9c on the electron-incident side, and an electron acceleration region is formed near the opening portion 10c on an electron emission side. Therefore, due to the electric field generated by the potential differences between potentials Va and Vc and between potentials Vb and Vc, an external force F having a component (deceleration component) in a direction opposite to the traveling direction of the electrons (direction from the photocathode 7 toward the phosphor screen 8) acts on the electrons passing through the region between the first electrode 9a and the third electrode 9c, particularly near the opening portion 10c of the third electrode 9c on the electron-incident side. In this way, when the electron group incident on the one-dimensional electron lens 9 is first incident on the electron deceleration region (that is, the region formed near the opening portion 10c on the electron-incident side), the electron passing through the trajectory away from the center plane CS of the one-dimensional electron lens 9 approaches the center plane CS due to the focusing action of the one-dimensional electron lens 9 while generating the speed difference due to the deceleration, so that the effect (effect of reducing the speed difference between the electrons) when passing through the electron acceleration region formed near the opening portion 10c of the third electrode 9c on the electron emission side is almost lost. Further, the electron moving along the peripheral trajectory Tp of the peripheral portion away from the center plane CS is more likely to be affected by the above-described external force F (deceleration action) than the electron moving along the center trajectory Tc along the center plane CS. Therefore, the speed difference between the electron moving along the center trajectory Tc and the electron moving along the peripheral trajectory Tp is relatively large. When such a speed difference becomes large, the difference in arrival time of the electron group generated simultaneously on the photocathode 7 to the phosphor screen 8 becomes large, thereby impairing the temporal resolution of the streak tube.

In contrast, in the example shown in (B) of Fig. 4, as described above, the positive potential Vc higher than the potentials Va and Vb applied to the first electrode 9a and the second electrode 9b is applied to the third electrode 9c. Therefore, the electron acceleration region is formed near the opening portion 10c of the third electrode 9c on the electron-incident side, and the electron deceleration region is formed near the opening portion 10c on the electron emission side. Therefore, the external force F having a component (acceleration component) in the same direction as the traveling direction of the electron (direction from the photocathode 7 toward the phosphor screen 8) acts on the electron passing through the region between the first electrode 9a and the third electrode 9c, particularly near the opening portion 10c of the third electrode 9c on the electron-incident side, by the electric field generated by the potential differences between potentials Va and Vc and between potentials Vb and Vc. In this way, iwhen the electron group incident on the one-dimensional electron lens 9 is first incident on the electron acceleration region (that is, the region formed near the opening portion 10c on the electron-incident side), it is possible to suppress the electron trajectories (particularly, the trajectory away from the center plane CS of the one-dimensional electron lens 9) from being too close to the center plane CS of the one-dimensional electron lens 9, thereby effectively reducing the speed difference between electrons. In addition, the electron group can pass through the electron deceleration region near the opening portion 10c on the electron emission side in a shorter time in a state where the speed of the electron group is increased as compared with the comparative example ((A) of Fig. 4). That is, the influence of the electron deceleration region, which causes the electron speed difference to increase, can be reduced as compared with the comparative example. Due to the effects described above, according to the example, it is possible to reduce the speed difference of the electron group passing through the one-dimensional electron lens 9. Further, the electron moving along the peripheral trajectory Tp of the peripheral portion away from the center plane CS is more likely to be affected by the above-described external force F (acceleration force) than the electron moving along the center trajectory Tc along the center plane CS. Therefore, the speed difference between the electron moving along the center trajectory Tc and the electron moving along the peripheral trajectory Tp is relatively small. As a result, according to the example, since the difference in arrival time of the electron group generated simultaneously on the photocathode 7 to the phosphor screen 8 can be reduced compared to the comparative example, the temporal resolution higher than that of the comparative example can be obtained.

In addition, the electron group passing through the peripheral trajectory Tp passes through a detour path (that is, a path longer than the path along the center trajectory Tc) relative to the electron group passing through the center trajectory Tc even in the electron focusing system upstream of the one-dimensional electron lens 9. Therefore, when the electron group enters the one-dimensional electron lens 9, the electron group passing through the peripheral trajectory Tp may be slightly delayed relative to the electron group passing through the center trajectory Tc. In the streak tube 1A, by adopting a configuration in which the potential Vc higher than the potentials Va and Vb applied to the first electrode 9a and the second electrode 9b is applied to the third electrode 9c, the delay of the electron group passing through the peripheral trajectory Tp with respect to the electron group passing through the center trajectory Tc is appropriately corrected. That is, the electron group passing through the peripheral trajectory Tp can be made to appropriately catch up with the electron group passing through the center trajectory Tc. As a result, the difference in arrival times of the electron group generated simultaneously on the photocathode 7 at the phosphor screen 8 can be reduced, and the high temporal resolution of the streak tube 1A can be achieved.

### [Effects of First Embodiment]

As described above, in the streak tube 1A, the potential Vc higher than the potential Va of the first electrode 9a and the potential Vb of the second electrode 9b is applied to the third electrode 9c disposed inside the first electrode 9a and the second electrode 9b located at both end portions of the plurality of electrodes (in the present embodiment, for example, the first electrode 9a, the second electrode 9b, and the third electrode 9c) forming the one-dimensional electron lens 9. Here, when a potential lower than those of the first and second electrodes 9a and 9b is applied to the third electrode 9c as in the comparative example described above, the electron deceleration region (region in which the external force F including a component in a direction opposite to the traveling direction of the electron acts on the electron as shown in (A) of Fig. 4) for decelerating the speed of the electron is formed near the opening portion 10c of the third electrode 9c on the electron-incident side. In contrast, according to the configuration of the present embodiment in which the potential Vc higher than those of the first and second electrodes 9a and 9b is applied to the third electrode 9c, as shown in (B) of Fig. 4, the formation of the electron deceleration region as described above can be suppressed, and the electrons passing near the opening portion 10c of the third electrode 9c on the electron-incident side can be accelerated. Further, among the electron group passing through the one-dimensional electron lens 9, the electron passing through the trajectory away from the center plane CS of the one-dimensional electron lens 9 receives stronger acceleration due to the potential difference. As a result, it is possible to reduce the speed difference between the electrons of the electron group after passing through the one-dimensional electron lens 9 (that is, the difference in arrival time at the sweep electrode 6), which is caused by the electron group passing through the one-dimensional electron lens 9. Therefore, by using the streak tube 1A, it is possible to effectively improve the temporal resolution.

In addition, the first electrode 9a is at the same potential as the second electrode 9b. With the above-described configuration, it is possible to more effectively improve the temporal resolution. More specifically, by setting the first electrode 9a and the second electrode 9b to be at the same potential, the electron lens formed around the third electrode 9c (that is, the region in which the electron lens action is caused by the electric field formed by the third electrode 9c) can be localized (that is, formed in the vicinity of the third electrode 9c). As a result, the electrons passing through the trajectory away from the center plane CS of the one-dimensional electron lens 9 experience stronger acceleration due to the potential difference than electrons passing through the vicinity of the center plane CS of the one-dimensional electron lens 9. As a result, since the speed difference (that is, the difference in arrival time at the sweep electrode 6) between electrons passing through the vicinity of the center plane CS and electrons passing through the trajectory away from the center plane CS can be more effectively reduced, the above-described effect of improving the temporal resolution can be enhanced.

In addition, the first slit member 11 is at the same potential as the second electrode 9b. With the above-described configuration, it is possible to more effectively improve the temporal resolution. In a case where the second electrode 9b and the first slit member 11 are at different potentials, an unnecessary electron lens that mixes with the electric field formed by the sweep electrode 6 (that is, a region in which an electron lens effect is caused between the one-dimensional electron lens 9 and the sweep electrode 6 separately from the electron lens formed by the one-dimensional electron lens 9) can be formed near the slit 11a (opening portion) of the first slit member 11. Such an unnecessary electron lens affects the temporal resolution characteristics. On the other hand, by setting the second electrode 9b and the first slit member 11 to be at the same potential, the first slit member 11 can be reliably separated from the electric field formed by the sweep electrode 6, so that the formation of an unnecessary electron lens as described above can be prevented. As a result, the temporal resolution characteristics can be stabilized.

In addition, the second slit member 12 is at the same potential as at least one (in the present embodiment, both) of the aperture electrode 5 and the first electrode 9a. With the above-described configuration, it is possible to more effectively improve the temporal resolution. More specifically, in a case where the second slit member 12 and the first electrode 9a are at the same potential, the electron lens formed around the third electrode 9c can be effectively localized, so that the same effect as the case where the first electrode 9a and the second electrode 9b are at the same potential as described above can be promoted. In addition, when the second slit member 12 and the aperture electrode 5 are at the same potential, the localization of the electron lens formed around the third electrode 9c is slightly weakened; however, this allows an electron acceleration region can also be formed near the opening of the first electrode 9a on the electron-incident side. As described above, according to the former configuration (configuration in which the second slit member 12 and the first electrode 9a are at the same potential), it is possible to improve the temporal resolution by improving the efficiency of the acceleration action in a narrow region (localized region around the third electrode 9c). On the other hand, according to the latter configuration (configuration in which the second slit member 12 and the aperture electrode 5 are at the same potential), it is possible to improve the temporal resolution by improving the acceleration efficiency in a wide region. In addition, as described above, although the effect of the former configuration is slightly weakened by the latter configuration, in a case where both configurations are provided, the effects of the former configuration and the latter configuration can be obtained in a balanced manner.

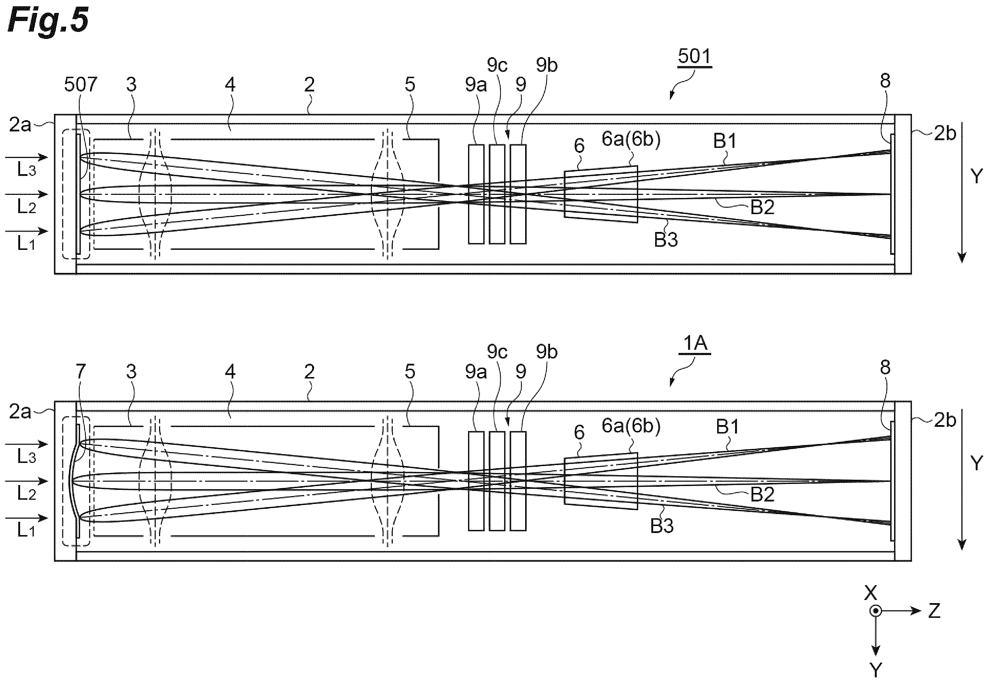

Next, as another effect of the first embodiment, an effect of the photocathode 7 of the present embodiment will be described. (A) of Fig. 5 is a diagram schematically showing a structure within a container 2 of a streak tube 501 of the comparative example from the positive X-axis direction, and (B) of Fig. 5 is a diagram schematically showing a structure within the container 2 of the example (streak tube 1A according to the first embodiment) from the positive X-axis direction.

The streak tube 501 is different from the streak tube 1A including the photocathode 7 having a convex curved shape protruding toward the incident panel 2a in that the streak tube 501 includes a photocathode 507 having a planar shape (flat plate shape) substantially parallel to the XY plane.

In (A) and (B) of Fig. 5, measured light components L1, L2, and L3 are representative components of the measured light L (linear optical image extending in the Y-axis direction) incident on different Y coordinates of the incident panel 2a. The above-described measured light components L1, L2, and L3 collide with the photocathodes 7 and 507 to emit the electron groups toward the output panel 2b. Electron beams B1, B2, and B3 show schematically the trajectories of the electrons generated at the photocathodes 7 and 507 in response to the incidence of the measured light components L1, L2, and L3, respectively, until the electrons reach the phosphor screen 8 from the photocathodes 7 and 507. For the sake of simplicity of the description, the coordinates of the measured light components L1, L2, and L3 and the electron beams B1, B2, and B3 in the X-axis direction are not considered here.

As shown in Fig. 5, since the electron groups generated by the measured light components L1, L2, and L3 need to pass through the aperture 5c of the disk-shaped electrode 5b of the aperture electrode 5 until the electron groups reach the phosphor screen 8 from the photocathodes 7 and 507, the electron beams B1, B2, and B3 intersect with each other near the center of the container 2. That is, an order relationship of the Y coordinates of the electron groups generated by the measured light components L1, L2, and L3 is reversed by the time the electron groups reach the phosphor screen 8 from the photocathodes 7 and 507.

Therefore, in a case where the photocathode 507 has a planar shape parallel to the XY plane as in the streak tube 501 shown in (A) of Fig. 5, the paths of the electron groups generated by the measured light components L1 and L3 incident at positions separated from the tube axis A in the Y direction are longer than the path of the electron group generated by the measured light component L2 incident near the tube axis A. In contrast, by making the photocathode 7 have a curved shape protruding toward the incident panel 2a as in the streak tube 1A shown in (B) of Fig. 5, it is possible to reduce the difference in path length of the electron groups to the phosphor screen 8.

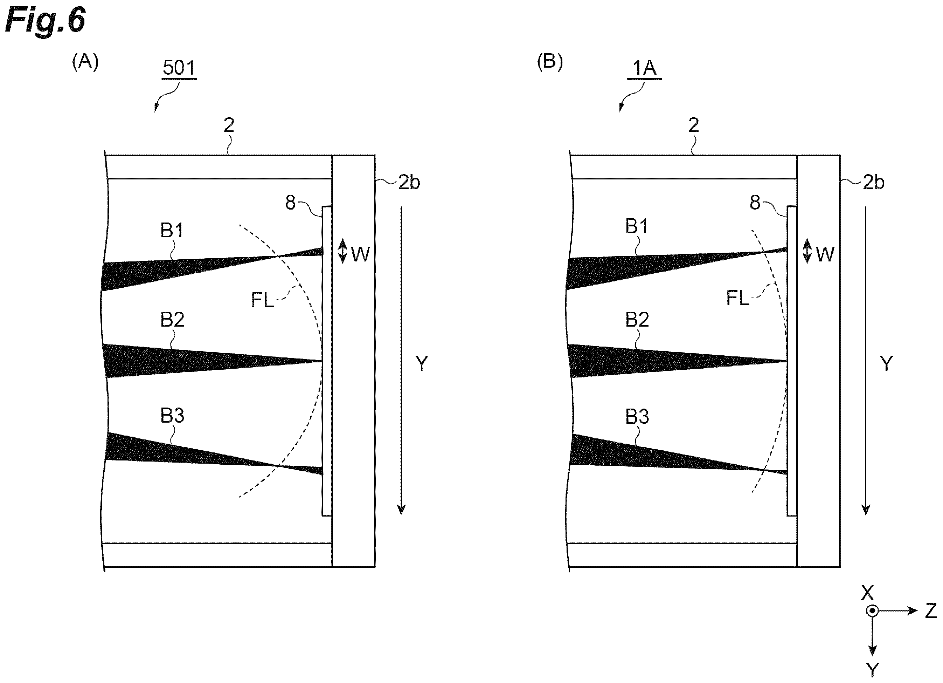

(A) of Fig. 6 is an enlarged view of a part of the streak tube 501 shown in (A) of Fig. 5, including the phosphor screen 8, and (B) of Fig. 6 is an enlarged view of a part of the streak tube 1A shown in (B) of Fig. 5, including the phosphor screen 8.

The focal line FL shown in (A) and (B) of Fig. 6 is a curved line connecting the points (focal points) where the spread of each of the electron beams B1, B2, and B3 is minimized. As shown in Fig. 6, when the focal point is adjusted such that the spread of the electron beam B2 having the shortest path along the tube axis A on the phosphor screen 8 is minimized, the focal points of the electron beams B1 and B3 are shifted away from the phosphor screen 8. That is, since the path lengths of the electron beams B1 and B3 differ from that of the electron beam B2, when the phosphor screen 8 is adjusted to be positioned at the focal point of the electron beam B2, the focal points of the electron beams B1 and B3 are shifted away from the phosphor screen 8. As a result, as shown in (A) of Fig. 6, in the streak tube 501 of the comparative example, spread widths W of the electron beams B1 and B3 of the peripheral portion away from the central portion on the phosphor screen 8 are increased, which may impair the spatial resolution.

In contrast, as in the example (streak tube 1A according to the first embodiment) shown in (B) of Fig. 6, in a case where the photocathode 7 having a convex curved shape protruding toward the incident panel 2a is adopted, a difference between the path lengths of the electron beams B1 and B3 and the path length of the electron beam B2 can be made smaller than that of the comparative example. That is, a curvature of the focal line FL of the example shown in (B) of Fig. 6 is smaller (more gradual) than a curvature of the focal line FL of the comparative example shown in (A) of Fig. 6. As a result, according to the example, the spread widths W of the electron beams B1 and B3 on the phosphor screen 8 can be reduced as compared with the comparative example, and the spatial resolution can be improved. In other words, in the traveling direction of the electron (that is, the direction from the incident panel 2a toward the output panel 2b), a distance difference between the focal point of the electrons (that is, the electron beam B2) emitted toward the output panel 2b from the position close to the center of the photocathode 7 and the focal point of the electrons (that is, the electron beams B1 and B3) emitted toward the output panel 2b from the position away from the center of the photocathode 7 can be reduced. As a result, the resolution (spatial resolution) in the spatial direction (Y-axis direction) due to the difference in electron emission position on the photocathode 7 (that is, the difference in incidence position of the measured light L on the photocathode 7) can be improved.

In addition, by reducing the difference in path length between the electron beam B2 passing through the central portion and the electron beams B1 and B3 passing through the peripheral portion with the above-described configuration, it is also expected that the variation in arrival time differences of the electron groups constituting the electron beams B1, B2, and B3 to the phosphor screen 8 can be suppressed. As a result, it is possible to suppress a decrease in electron density on the phosphor screen 8 of the electron groups constituting the electron beams B1, B2, and B3. Therefore, with the above-described configuration, it is also possible to improve the temporal resolution along with the improvement of the spatial resolution.

### [Modification Example of First Embodiment]

The one-dimensional electron lens 9 may include four or more electrodes. That is, two or more electrodes including the third electrode 9c described above may be disposed between the first electrode 9a and the second electrode 9b.

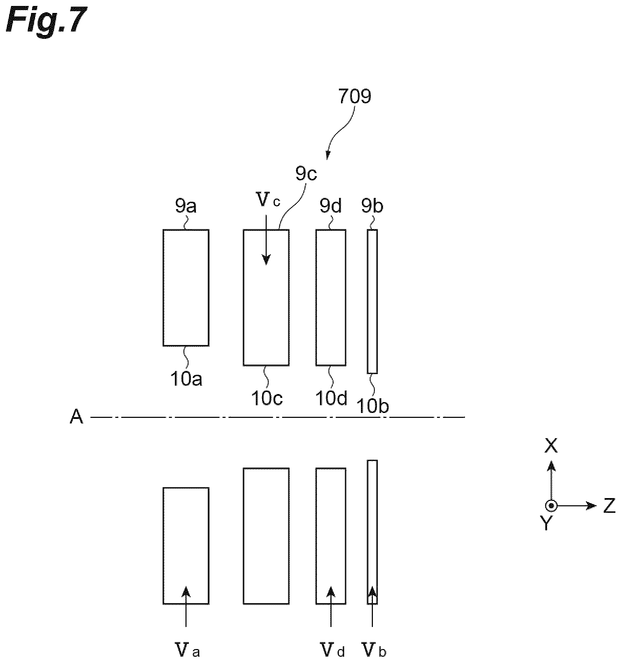

Fig. 7 is a diagram schematically showing a one-dimensional electron lens 709 according to the modification example. As shown in Fig. 7, the one-dimensional electron lens 709 includes the first electrode 9a disposed at the position closest to the incident panel 2a, the second electrode 9b disposed at the position closest to the output panel 2b, and the third electrode 9c disposed between the first electrode 9a and the second electrode 9b to be spaced apart from the first electrode 9a and the second electrode 9b, and further includes another electrode 9d disposed between the second electrode 9b and the third electrode 9c to be spaced apart from the second electrode 9b and the third electrode 9c.

Potentials Va, Vb, Vc, and Vd are applied to the first electrode 9a, the second electrode 9b, the third electrode 9c, and the other electrode 9d, respectively. In this case, it is only necessary that "Vc > Va" and "Vc > Vb" be satisfied. For example, as a magnitude relationship of the applied potentials, an aspect of "Vd > Vc > Va = Vb", "Vc = Vd > Va = Vb", "Vc > Va = Vb = Vd", "Vc > Va = Vb > Vd", or the like may be employed. In addition, two or more other electrodes 9d may be disposed. In addition, the other electrode 9d may function as an electrode to which the potential Vd higher than the potentials Va and Vb applied to the first electrode 9a and the second electrode 9b is applied (that is, an electrode that functions in the same manner as the third electrode 9c). That is, the one-dimensional electron lens may have a plurality of electrodes (third electrodes) satisfying the potential requirements described above. In addition, as shown in Fig. 7, the widths (lengths in the Z-axis direction) of the respective electrodes constituting the one-dimensional electron lens may be different from one another. The opening widths (widths in the X-axis direction) of the opening portions 10a to 10d of the respective electrodes may also be different from one another.

### [Second Embodiment]

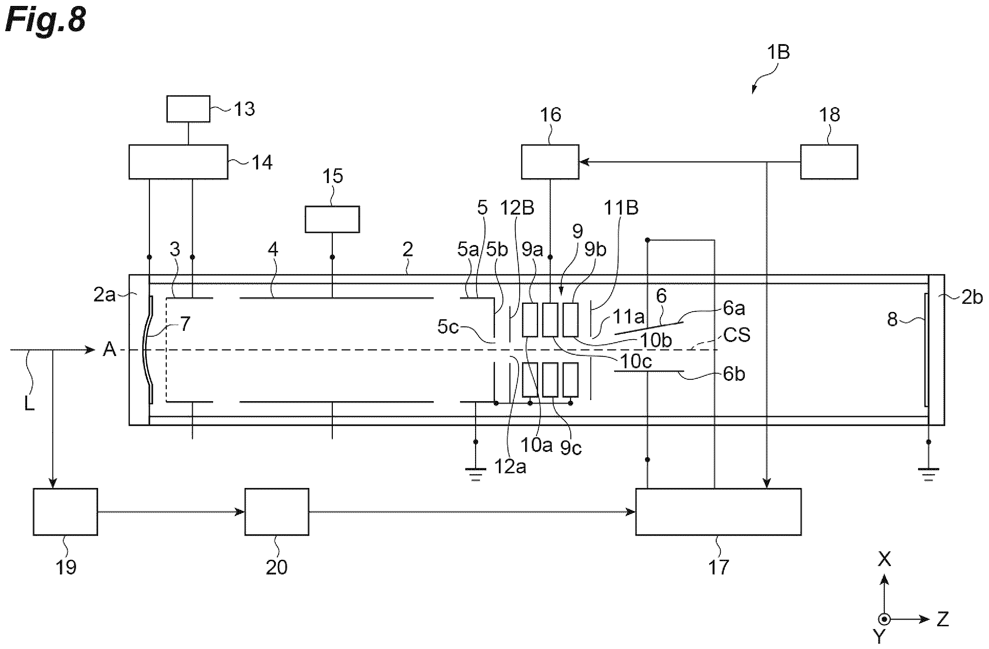

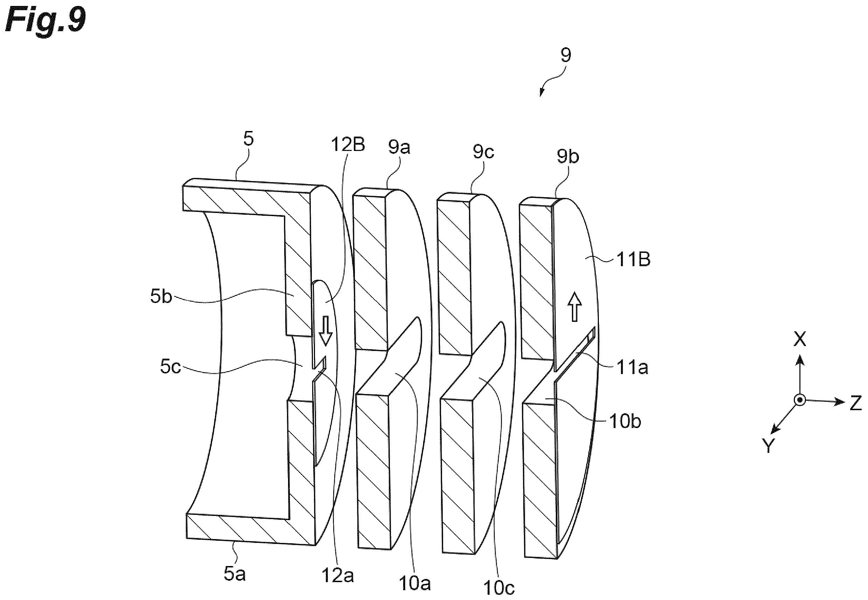

A streak tube 1B according to a second embodiment will be described with reference to Figs. 8 to 13. Fig. 8 is a cross-sectional view of the streak tube 1B along a plane including the tube axis A and perpendicular to a deflection plates (plate-shaped electrodes 6a and 6b) of the sweep electrode 6. Fig. 9 is a perspective cross-sectional view schematically showing the aperture electrode 5, a second slit member 12B, the one-dimensional electron lens 9, and a first slit member 11B in the streak tube 1B.

As shown in Figs. 8 and 9, the first slit member 11B and the second slit member 12B of the streak tube 1B differ from the first slit member 11 and the second slit member 12 of the streak tube 1A according to the first embodiment in the following points.

The first slit member 11B is disposed at a position spaced apart from the center plane CS on a side on which the plate-shaped electrode 6a (electrode to which a positive potential is applied at the start of sweeping) is positioned with respect to the center plane CS (plane passing through the center of the one-dimensional electron lens 9 and orthogonal to the sweep direction) in the center of the slit 11a in the sweep direction (X-axis direction). That is, the first slit member 11B is disposed at a position slightly shifted in the positive X-axis direction with respect to the first slit member 11 of the streak tube 1A. In the present embodiment, as an example, the center of the slit 11a of the first slit member 11B is disposed at a position spaced apart (eccentric) from the center plane CS by a distance (0.3 mm in the present embodiment) within a range of 0.1 mm to 0.7 mm in the X-axis positive direction.

The second slit member 12B is disposed at a position spaced apart from the center plane CS on a side on which the plate-shaped electrode 6b (electrode to which a negative potential is applied at the start of sweeping) is positioned with respect to the center plane CS in the center of the slit 12a in the sweep direction (X-axis direction). That is, the second slit member 12B is disposed at a position slightly shifted in the negative X-axis direction with respect to the second slit member 12 of the streak tube 1A. In the present embodiment, as an example, the center of the slit 12a of the second slit member 12B is disposed at a position spaced apart (eccentric) from the center plane CS by a distance (0.2 mm in the present embodiment) within a range of 0.1 mm to 0.5 mm in the negative X-axis direction.

Here, a region on the electron incident side in a region between the plate-shaped electrodes 6a and 6b of the sweep electrode 6, on a side on which the plate-shaped electrode 6b is positioned with respect to the center plane CS, is a deceleration region in which the electrons are likely to be decelerated because a negative electric field is generated at the start of sweeping. On the other hand, a region on the electron incident side in the region between the plate-shaped electrodes 6a and 6b of the sweep electrode 6, on a side on which the plate-shaped electrode 6a is positioned with respect to the center plane CS, is an acceleration region in which the electrons are likely to be accelerated because a positive electric field is generated at the start of sweeping.

By providing the first slit member 11B disposed to be eccentric in the X-axis positive direction as described above, a part of the electron group moving toward the deceleration region (that is, the electrons passing through the peripheral portion that is significantly spaced apart from the center plane CS in the X-axis negative direction) in the electron group that has passed through the one-dimensional electron lens 9 can be blocked, and the number of electrons entering the deceleration region can be reduced. As a result, it is possible to suppress the variation in speed and traveling direction (angle) (that is, a variation in arrival time at the phosphor screen 8) of the electron beam entering between the plate-shaped electrodes 6a and 6b. As a result, it is possible to suppress spatial spreading of the electron group reaching the phosphor screen 8 in the sweep direction (time direction), and improve the temporal resolution. More specifically, in a case where the electron group passes through the region on the electron incident side of the sweep electrode 6, the electrons passing through the region (acceleration region) near the plate-shaped electrode 6a to which a positive potential is applied at the start of sweeping is accelerated in the direction from the incident panel 2a toward the output panel 2b by the electric field caused by the positive potential. On the other hand, electrons passing through the region (deceleration region) near the plate-shaped electrode 6b to which a negative potential is applied at the start of sweeping are decelerated in the direction from the output panel 2b toward the incident panel 2a. A difference in acceleration and deceleration effects between electrons incident on the acceleration region and electrons incident on the deceleration region may cause a variation in arrival positions on the phosphor screen 8. With the first slit member 11B described above, it is possible to block electrons that attempt to enter the deceleration region near the plate-shaped electrode 6b of the sweep electrode 6 among the electron groups passing through the one-dimensional electron lens 9. As a result, it is possible to reduce the variation in arrival positions of the electrons reaching the phosphor screen 8, and improve the temporal resolution.

In addition, by providing the second slit member 12B disposed eccentrically in the negative X-axis direction as described above, a part of the electron group incident on the one-dimensional electron lens 9 passing through the peripheral portion that is significantly spaced apart from the center plane CS in the positive X-axis direction can be blocked. As a result, it is possible to suppress the variation in speed and traveling direction (angle) (that is, the variation in arrival position at the phosphor screen 8) of the electron group entering between the plate-shaped electrodes 6a and 6b. As a result, it is possible to suppress spatial spreading of the electron group reaching the phosphor screen 8 in the sweep direction (time direction), and improve the temporal resolution. In addition, electrons passing through the peripheral path spaced apart from the center plane CS of the one-dimensional electron lens 9 travel a longer path length than electrons passing through the center path near the center plane CS. That is, a path length of the peripheral path is longer than that of the center path. Therefore, electrons passing through the peripheral path spaced apart from the center plane CS may be delayed in reaching the phosphor screen 8 compared to electrons passing through the center path near the center plane CS. Therefore, as a result, a variation in arrival position of the electron on the phosphor screen 8 may occur. With the above-described configuration, electrons passing through the peripheral path among the electron group incident on the one-dimensional electron lens 9 can be blocked by the second slit member 12 in front of the one-dimensional electron lens 9. As a result, it is possible to reduce the variation in arrival position of the electrons reaching the phosphor screen 8, and improve the temporal resolution.

Further, by combining the configuration C1 of the streak tube 1A (that is, the configuration in which the potential Vc higher than the potential Va of the first electrode 9a and the potential Vb of the second electrode 9b is applied to the third electrode 9c) and the configuration C2 of the streak tube 1B (that is, the configuration C2 of the first slit member 11B and the second slit member 12B), it is possible to more effectively improve the temporal resolution. More specifically, in a case where the above-described configuration C1 is adopted, the electron group passing through the one-dimensional electron lens 9 is accelerated as compared with a case where a configuration in the related art in which the potential Vc is lower than the potentials Va and Vb is adopted, and thus there is a concern that a light condensing effect of the one-dimensional electron lens 9 may be reduced. That is, in the above-described configuration C1, there is a concern that the trajectories of the electron group passing through the one-dimensional electron lens 9 may spread out more easily than in the above-described conventional configuration. Therefore, with the above-described configuration C2, by blocking a part of the electron group passing through the peripheral portion spaced apart from the center plane CS, the temporal resolution can be suitably improved. That is, by reducing the speed difference of the electron beam passing through the one-dimensional electron lens 9 using the configuration C1, and by blocking the electrons of the peripheral portion among the electron group that has spread more than in the prior art due to the configuration C1, using the configuration C2, the temporal resolution can be suitably improved.

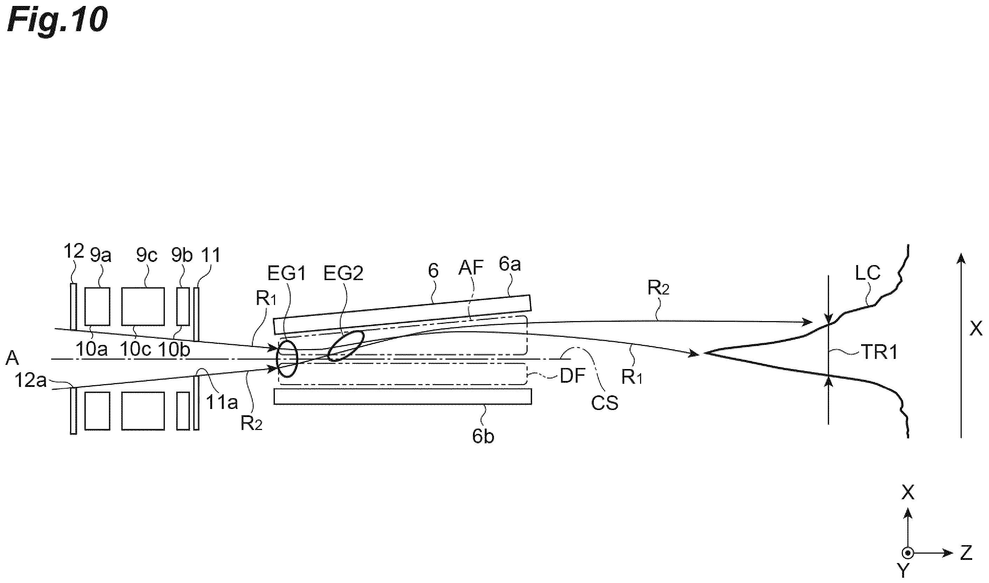

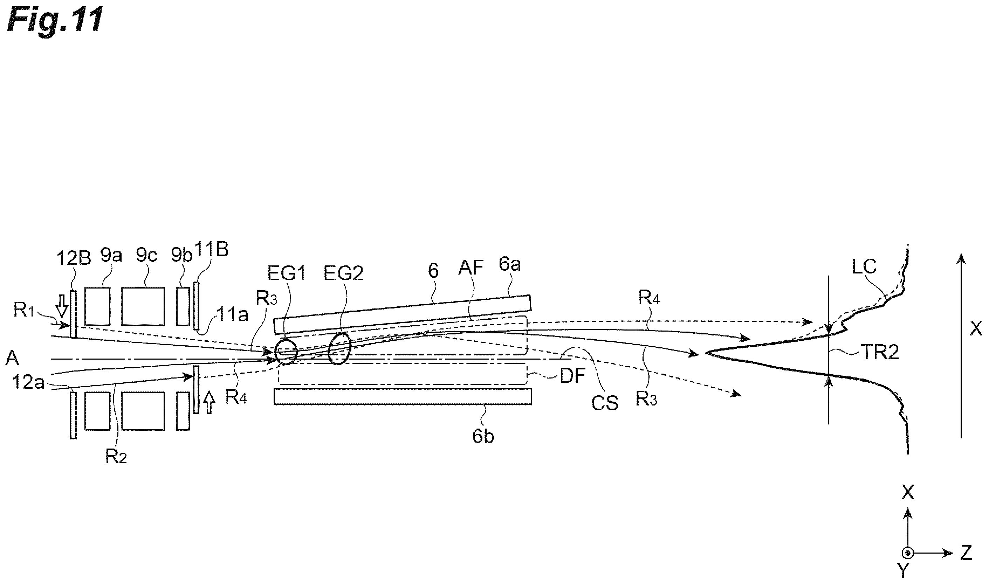

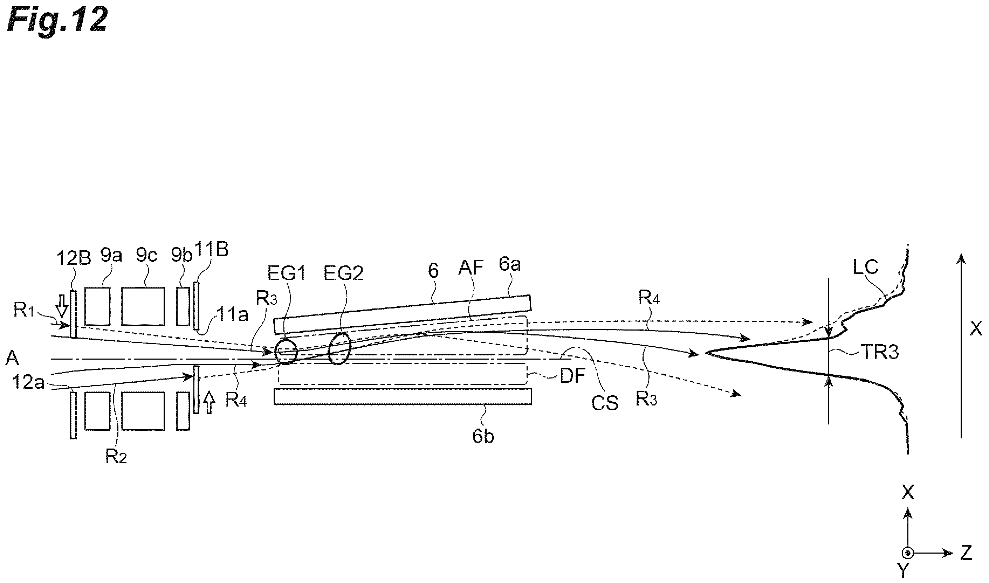

Next, the effects of the streak tube 1B will be further described with reference to Figs. 10 to 12. Fig. 10 is a diagram schematically showing a result of a temporal resolution test of a streak tube of the comparative example (hereinafter, simply referred to as "comparative example"). Fig. 11 is a diagram schematically showing a result of a temporal resolution test of a streak tube of a first example (hereinafter, simply referred to as "first example"). Fig. 12 is a diagram schematically showing a result of a temporal resolution analysis (simulation) of a streak tube of a second example (hereinafter, simply referred to as "second example").

The comparative example shown in Fig. 10 does not include both of the above-described configurations C1 and C2. That is, the comparative example includes the first slit member 11 and the second slit member 12 (that is, the slit members disposed such that the centers of the slits 11a and 12a coincide with the tube axis A) as in the streak tube 1A of the first embodiment. In addition, in the comparative example, "Va = Vb = 0 V (GND)" is applied to the first electrode 9a and the second electrode 9b, and the potential Vc (= -500 V) lower than the potentials Va and Vb is applied to the third electrode 9c.

The first example shown in Fig. 11 includes the above-described configuration C2 while not including the configuration C1. That is, the first example includes the first slit member 11B and the second slit member 12B as in the streak tube 1B according to the second embodiment. In addition, in the first example, as in the comparative example, "Va = Vb = 0 V (GND)" is applied to the first electrode 9a and the second electrode 9b, and the potential Vc (= -500 V) lower than the potentials Va and Vb is applied to the third electrode 9c.

The second example shown in Fig. 12 includes both of the above-described configurations C1 and C2. That is, the second example includes the first slit member 11B and the second slit member 12B as in the streak tube 1B according to the second embodiment. In addition, in the second example, "Va = Vb = 0 V (GND)" is applied to the first electrode 9a and the second electrode 9b, and the potential Vc (= +700 V) higher than the potentials Va and Vb is applied to the third electrode 9c.

Measurement conditions other than the above-described conditions (for example, a type of the photocathode 7, a type of the measured light L, and the like) were the same in the comparative example, the first example, and the second example.

### (Comparative Example)

The comparative example will be described with reference to Fig. 10. In Fig. 10, a path curve R1 is a trajectory of an electron that travels the peripheral path farthest from the center plane CS in the positive X-axis direction among the electrons incident on the sweep electrode 6 (that is, the electrons entering the space between the plate-shaped electrodes 6a and 6b). A path curve R2 is a trajectory of an electron passing through the peripheral path farthest from the center plane CS in the negative X-axis direction among the electrons incident on the sweep electrode 6. That is, the path curve R1 is a path passing near the upper end of the slit 12a of the second slit member 12, and the path curve R2 is a path passing near the lower end of the slit 12a.

In the space between the plate-shaped electrodes 6a and 6b of the sweep electrode 6, a region on a side closer to the plate-shaped electrode 6a than the center plane CS is referred to as an acceleration region AF, and a region on a side closer to the plate-shaped electrode 6b than the center plane CS is referred to as a deceleration region DF. At the start of sweeping, a positive potential is applied to the plate-shaped electrode 6a, and a negative potential is applied to the plate-shaped electrode 6b. Due to the effect of the electric field generated by the above-described application of the potentials, the electron incident on the acceleration region AF tends to be accelerated in the direction of the output panel 2b, and the electron incident on the deceleration region DF tends to be decelerated in the direction of the incident panel 2a. From the viewpoint of improving the temporal resolution, it is preferable to reduce a difference in arrival time on the phosphor screen 8 due to a difference in path of the electron groups generated simultaneously on the photocathode 7, and for this purpose, it is preferable to increase a proportion of the electrons entering the acceleration region AF as much as possible. In other words, it is preferable to reduce the number of electrons (electrons entering the deceleration region DF) having a large speed difference from the electrons entering the acceleration region AF as much as possible.

As shown in Fig. 10, the electron passing through the path curve R1 enters the acceleration region AF from the beginning, whereas the electron passing through the path curve R2 initially enters the deceleration region DF. Therefore, a distribution of the electrons immediately after entering the space in the sweep electrode 6 is generally a distribution across the acceleration region AF and the deceleration region DF as shown in an electron group EG1. Since the electron group incident on the deceleration region DF is decelerated relative to the acceleration region AF, the distribution of the electron group subsequently extends in the Z-axis direction as in electron group EG2. That is, the speed difference (spread in the Z-axis direction) of the electron group is relatively large. Such a speed difference of the electron group appears as a deviation in the X-coordinate when the electron collides with the phosphor screen 8. Therefore, from the viewpoint of improving the temporal resolution of the streak tube, it is preferable to increase the proportion of the electrons entering the acceleration region AF as much as possible (that is, to reduce the proportion of the electrons entering the deceleration region DF as much as possible). From such a viewpoint, it can be said that there is room for improvement in the comparative example.

A line graph LC depicted at a right end of Fig. 10 shows a distribution of the X coordinates of the collision points of the electrons colliding with the phosphor screen 8. This indicates that, as dispersion in the X-axis direction of the line graph LC is smaller, the temporal resolution of the streak tube is higher. A temporal resolution TR1 obtained in the comparative example shown in Fig. 10 was about 600 fs.

### (First Example)

Next, the first example will be described with reference to Fig. 11. As shown in Fig. 11, in the first example, the path curve R1 of the electron passing near the upper end of the slit 12a in the comparative example is blocked by the second slit member 12B that is eccentric in the negative X-axis direction. In addition, the path curve R2 of the electron passing near the lower end of the slit 11a of the first slit member 11 in the comparative example is blocked by the lower end of the slit 11a of the first slit member 11B that is eccentric in the positive X-axis direction. As a result, a path curve R3 of an electron passing through the peripheral path farthest from the center plane CS in the positive X-axis direction among the electrons incident on the sweep electrode 6 passes through the inside closer to the center plane CS than the path curve R1 of the comparative example. In addition, a path curve R4 of an electron passing through the peripheral path farthest from the center plane CS in the negative X-axis direction among the electrons incident on the sweep electrode 6 passes through the inside closer to the center plane CS than the path curve R2 of the comparative example.

That is, in the first example, the electrons passing through the peripheral portion spaced apart from the center plane CS in the X-axis direction are effectively blocked by the first slit member 11B and the second slit member 12B. As a result, a distribution width of the electron group passing through the sweep electrode 6 in the X-axis direction is reduced. More specifically, as shown in Fig. 11, a width of the electron group EG1 of the first example in the X-axis direction is smaller than a width of the electron group EG1 of the comparative example shown in Fig. 10 in the X-axis direction. In addition, in the first example, the proportion of the electrons entering the deceleration region DF is smaller than that in the comparative example. That is, the electron group incident on the sweep electrode 6 is narrowed by the first slit member 11B and the second slit member 12B and is effectively guided to the acceleration region AF. Therefore, the subsequent distribution of the electron group EG2 is not extended in the Z-axis direction as compared with the comparative example shown in Fig. 10, and the dispersion of the X coordinate of the collision position of the electrons colliding with the phosphor screen 8 is suppressed to be small. As a result, in the first example, a temporal resolution TR2 (= about 500 fs) higher than that of the comparative example is obtained as the analysis result. A broken line shown in the illustrated region of the line graph LC of Fig. 11 indicates a position of the line graph LC of the comparative example (Fig. 10).

### (Second Example)

Next, the second example will be described with reference to Fig. 12. As described above, the second example includes the above-described configuration C1 in which the potential Vc applied to the third electrode 9c is higher than the potential Va applied to the first electrode 9a and the potential Vb applied to the second electrode 9b, in addition to the first example. Therefore, in the second example, although there is a concern that the electron group passing through the one-dimensional electron lens 9 may be more spread than in the comparative example and the first example, with the above-described configuration C2 (the first slit member 11B and the second slit member 12B), while effectively suppressing the spread of such an electron group, both effects of the configurations C1 and C2 (that is, reduction in the variation in the arrival time of the electron group at the phosphor screen 8) can be obtained. As a result, in the second example, a temporal resolution TR3 (= about 350 fs) higher than that of the first example was obtained as an analysis result. A broken line shown in the illustrated region of the line graph LC of Fig. 12 indicates a position of the line graph LC of the comparative example (Fig. 10).

As shown in Figs. 10 to 12, from the results of the comparative example and the first example, it has been confirmed that the effect of improving the temporal resolution can be obtained even in a case where only the configuration C2 out of the above-described configurations C1 and C2 is adopted. Further, from the results of the first and second examples, it has been confirmed that the temporal resolution can be improved by adopting the above-described configuration C1.

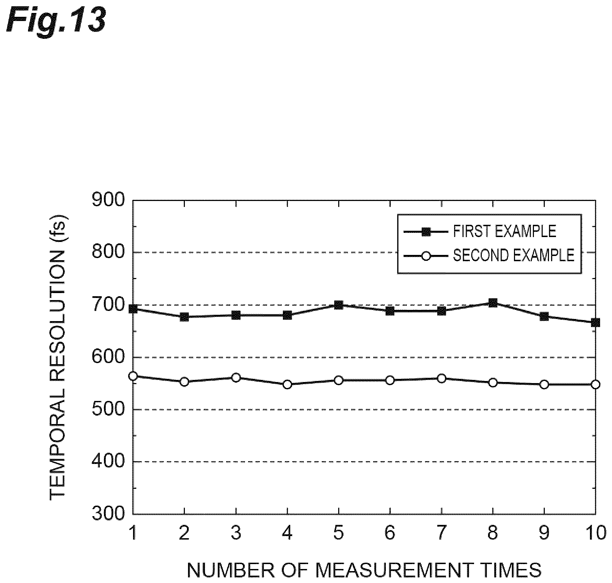

Fig. 13 shows results of performing a plurality of measurements for each of the first example and the second example described above under conditions (type of the photocathode 7 and the like) different from the conditions of the temporal resolution analysis of Figs. 10 to 12 described above. Also from the results shown in Fig. 13, it has been confirmed that an improved temporal resolution is achieved in a case where both of the configurations C1 and C2 are adopted as compared with a case where only the above-described configuration C2 is adopted.

### [Modification Example]

Although the embodiments and the modification examples of the present disclosure have been described above, the present disclosure is not limited to the configurations described in each of the above-described embodiments and modification examples. The materials and shapes of each configuration are not limited to the specific materials and shapes described above, and various materials and shapes other than those described above can be adopted. In addition, some configurations included in each of the above-described embodiments and modification examples may be omitted or changed as appropriate, or may be optionally combined.

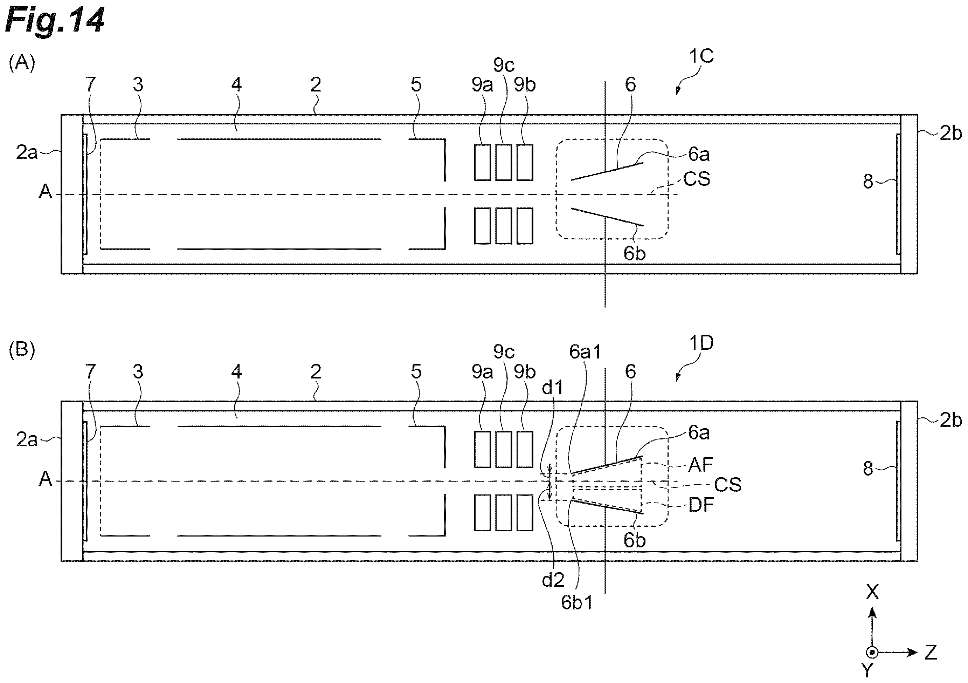

For example, the arrangement and shape of the sweep electrode 6 are not limited to the above-described embodiment (see Fig. 1 and the like). Some modification examples of the sweep electrode 6 will be described with reference to Fig. 14. In Fig. 14, the slit members described in the above-described embodiment are omitted.

(A) of Fig. 14 is a diagram schematically showing a streak tube 1C including a sweep electrode 6 according to a first modification example. As shown in (A) of Fig. 14, the sweep electrode 6 (plate-shaped electrodes 6a and 6b) may be disposed symmetrically about the center plane CS of the one-dimensional electron lens 9.

(B) of Fig. 14 is a diagram schematically showing a streak tube 1D including a sweep electrode 6 according to a second modification example. As shown in (B) of Fig. 14, a distance d1 between an end portion 6a1 of the plate-shaped electrode 6a (electrode to which a positive potential is applied at the start of sweeping of the sweep electrode 6), which is closest to the incident panel 2a, and the center plane CS may be shorter than a distance d2 between an end portion 6b1 of the plate-shaped electrode 6b (electrode to which a negative potential is applied at the start of sweeping of the sweep electrode 6), which is closest to the incident panel 2a, and the center plane CS on an inner side surface of the plate-shaped electrode 6b facing the center plane CS. In the example of (B) of Fig. 14, the sweep electrode 6 of the streak tube 1D is disposed at a position where the sweep electrode 6 of the streak tube 1C is slightly translated in the negative X-axis direction. With the above-described configuration, a center of an incident side opening of the sweep electrode 6 in the X-axis direction can be shifted downward from the center plane CS (in a direction approaching the plate-shaped electrode 6b to which a negative potential is applied at the start of sweeping). With the above-described configuration, the electron beam that has passed through the one-dimensional electron lens 9 can be suitably directed into the region near the plate-shaped electrode 6a to which a positive potential is applied at the start of sweeping (that is, the acceleration region AF closer to the plate-shaped electrode 6a than the center position of the incident side opening of the sweep electrode 6 in the X-axis direction). In addition, the number of electrons entering the region near the plate-shaped electrode 6b to which a negative potential is applied at the start of sweeping (that is, the deceleration region DF closer to the plate-shaped electrode 6b than the center position of the incident side opening of the sweep electrode 6 in the X-axis direction) can be reduced. As a result, the variation in arrival positions of the electrons reaching the phosphor screen 8 is reduced. As a result, it is possible to improve the temporal resolution even more effectively.

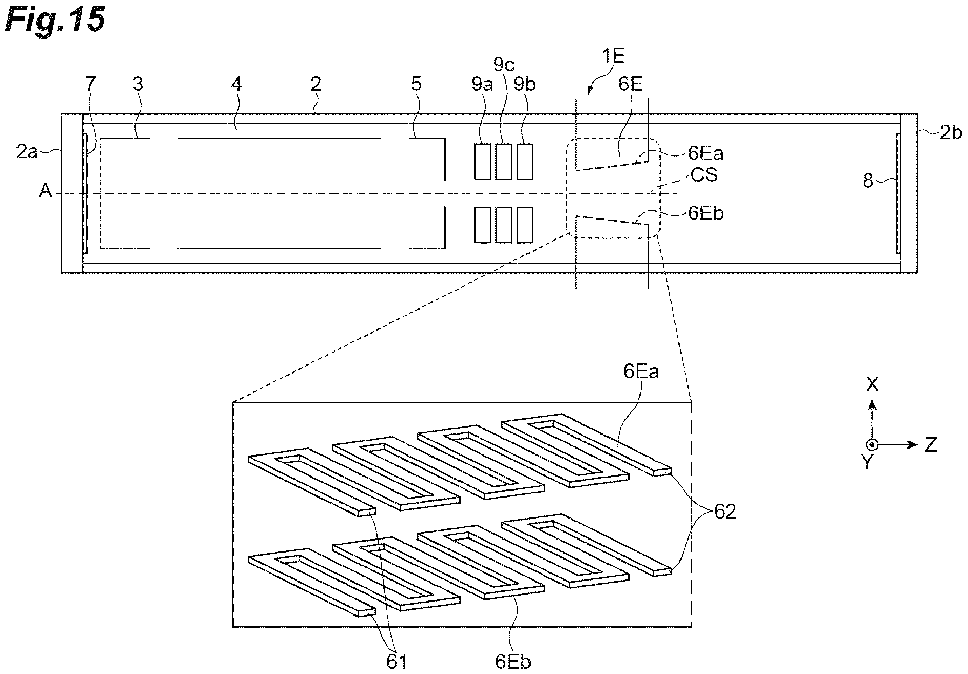

In addition, in the streak tube according to the present disclosure, the pair of plate-shaped electrodes in the sweep electrode may be traveling wave type electrodes configured such that the applied potential changes in synchronization with a traveling speed of the electrons between the pair of plate-shaped electrodes. Fig. 15 is a diagram schematically showing a streak tube 1E including a sweep electrode 6E according to a third modification example having such a configuration. As shown in Fig. 15, the sweep electrode 6E has a plate-shaped electrode 6Ea (first plate-shaped electrode) and a plate-shaped electrode 6Eb (second plate-shaped electrode) that are formed to be folded in a zigzag shape such that a voltage propagates in synchronization with the traveling electrons.

In the sweep electrode 6E, a potential is applied such that the potential propagates from end portions 61 closest to the incident panel 2a toward end portions 62 closest to the output panel 2b of the plate-shaped electrodes 6Ea and 6Eb in accordance with the traveling speed of the electrons passing through the sweep electrode 6E. With the above-described configuration, since more precise sweep control of the electron beam in the sweep electrode 6E can be performed, the temporal resolution can be more effectively improved.

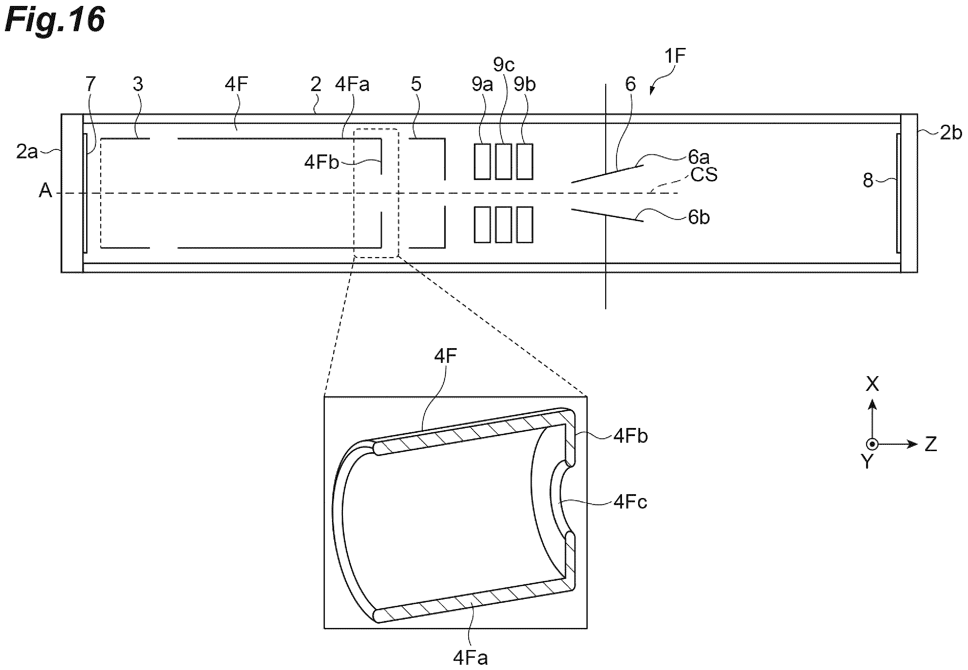

In addition, in the above-described embodiment, the main focus electrode 4 formed in an axisymmetric cylindrical shape has been described, but the shape of the main focus electrode is not limited to the above-described shape. For example, the main focus electrode may have a shape in which an exit side (a side on which the aperture electrode 5 is positioned) is narrowed, as in the aperture electrode 5. Fig. 16 is a diagram schematically showing a streak tube 1F having a main focus electrode 4F according to a modification example having such a shape. The main focus electrode 4F has a cylindrical electrode 4Fa having a central axis that substantially coincides with the tube axis A, and a disk-shaped electrode 4Fb formed at an end portion of the cylindrical electrode 4Fa on a phosphor screen 8 side. An aperture 4Fc (opening) for allowing the electrons to pass through is provided at a central portion of the disk-shaped electrode 4Fb. With the above-described configuration, when the electron beam passes through the main focus electrode 4F, the spread of the electron beam can be suitably suppressed by blocking electrons passing through the path spaced apart from the tube axis A with the disk-shaped electrode 4Fb.

In addition, various modifications other than those described above are possible. For example, the above-described voltage control of the plate-shaped electrode 6a and the plate-shaped electrode 6b may be reversed. That is, a negative potential may be applied to the plate-shaped electrode 6a and a positive potential may be applied to the plate-shaped electrode 6b at the start of sweeping. In this case, the eccentric direction of the first slit member 11B and the second slit member 12B (the direction in which the first slit member 11B and the second slit member 12B are shifted along the X-axis direction) need only be opposite to the direction described in the second embodiment.

In addition, in the streak tube, one or both of the first and second slit members may be omitted. In addition, the first slit members 11 and 11B may be disposed at positions spaced apart from the third electrode 9c. In addition, the second slit members 12 and 12B may be disposed to be in contact with the first electrode 9a, or may be disposed at a position spaced apart from both the first electrode 9a and the aperture electrode 5 between the first electrode 9a and the aperture electrode 5 (disk-shaped electrode 5b). In a case where the second slit members 12 and 12B are disposed to be in contact with the first electrode 9a, the second slit members 12 and 12B are at the same potential as the first electrode 9a.

In addition, shift amounts of the first slit member 11B and the second slit member 12B may be appropriately changed. For example, since an energy distribution and an angle distribution of the photoelectrons emitted in the container 2 differ depending on the type of the photocathode 7 used in the streak tube, the shift amount of the second slit member 12B may be appropriately adjusted within a range of, for example, 0.1 mm to 0.4 mm depending on the type of the photocathode 7. By changing the shift amount of the second slit member 12B depending on the type of the photocathode 7 in this way, electrons that would degrade the temporal resolution can be suitably blocked by the second slit member 12B. In addition, in the present embodiment, although the setting signal generation unit 18 controls both the third electrode voltage source 16 and the sweep voltage generation unit 17, the third electrode voltage source 16 and the sweep voltage generation unit 17 may be controlled by control devices prepared individually. That is, the controller that controls the third electrode voltage source 16 and the sweep voltage generation unit 17 may be formed of a single control device or may be formed of a plurality of control devices. In addition, the controller that controls the third electrode voltage source 16 may be configured to control only on/off switching of the third electrode voltage source 16. In addition, in the present embodiment, although a plurality of voltage sources are used for supplying power to each configuration, power may be supplied by generating a plurality of voltages suitable for each configuration using a single voltage source.

In addition, in the present embodiment, the first electrode 9a and the second electrode 9b are set to be at the same potential by being electrically connected to each other, but the configuration for setting the first electrode 9a and the second electrode 9b to be at the same potential is not limited to the above-described configuration. For example, the first electrode 9a and the second electrode 9b may be configured such that the same potential is supplied from power supply paths (for example, controllers different from each other) separate from each other. In addition, the first electrode 9a and the second electrode 9b may be individually grounded. The same applies to a configuration for setting the first slit members 11 and 11B and the second electrode 9b to be at the same potential, and a configuration for setting the second slit members 12 and 12B and at least one of the aperture electrode 5 and the first electrode 9a to be at the same potential.

### Reference Signs List

1A, 1B, 1C, 1D, 1E, 1F: streak tube
2: container
2a: incident panel
2b: output panel
6, 6E: sweep electrode
6a, 6Ea: plate-shaped electrode (first plate-shaped electrode)
6b, 6Eb: plate-shaped electrode (second plate-shaped electrode)
7: photocathode
8: phosphor screen
9: one-dimensional electron lens
9a: first electrode
9b: second electrode
9c: third electrode
10a, 10b, 10c, 10d: opening portion
11, 11B: first slit member
12, 12B: second slit member
11a: slit (first slit)
12a: slit (second slit)
18: setting signal generation unit (controller)
CS: center plane
L: measured light (light to be measured)

## Claims

1. A streak tube comprising:
a container including an incident panel and an output panel;
a photocathode provided in the container and configured to emit electrons in response to light to be measured incident from the incident panel;
a sweep electrode provided in the container and including a pair of plate-shaped electrodes facing each other in a sweep direction along the output panel, the sweep electrode being configured to deflect the electrons in the sweep direction;
a plurality of electrodes provided between the photocathode and the sweep electrode and forming an electron lens that focuses the electrons, each of the plurality of electrodes being provided with an opening portion through which the electrons pass; and
a controller configured to control a potential applied to at least one of the plurality of electrodes,
wherein the plurality of electrodes include a first electrode disposed at a position closest to the incident panel, a second electrode disposed at a position closest to the output panel, and a third electrode disposed between the first electrode and the second electrode to be spaced apart from the first electrode and the second electrode, and
the controller applies a potential higher than a potential of the first electrode and a potential of the second electrode to the third electrode.

2. The streak tube according to claim 1, wherein the first electrode is at the same potential as the second electrode.

3. The streak tube according to claim 1, further comprising:
a first slit member provided between the electron lens and the sweep electrode and including a first slit having a width smaller than a width of the opening portion of each of the plurality of electrodes in the sweep direction,
wherein the controller controls a potential applied to the sweep electrode, at a start of sweeping by the sweep electrode, to apply a positive potential to a first plate-shaped electrode, which is one of the pair of plate-shaped electrodes, and to apply a negative potential to a second plate-shaped electrode, which is the other of the pair of plate-shaped electrodes, and
a center of the first slit in the sweep direction is disposed at a position spaced apart from a center plane passing through a center of the electron lens and orthogonal to the sweep direction toward a side on which the first plate-shaped electrode is positioned.

4. The streak tube according to claim 3,
wherein the first slit member is at the same potential as the second electrode.

5. The streak tube according to any one of claims 1 to 4, further comprising:
a second slit member provided between the electron lens and the incident panel and including a second slit having a width smaller than a width of the opening portion of each of the plurality of electrodes in the sweep direction,
wherein the controller controls a potential applied to the sweep electrode, at a start of sweeping by the sweep electrode, to apply a positive potential to a first plate-shaped electrode, which is one of the pair of plate-shaped electrodes, and to apply a negative potential to a second plate-shaped electrode, which is the other of the pair of plate-shaped electrodes, and
a center of the second slit in the sweep direction is disposed at a position spaced apart from a center plane passing through a center of the electron lens and orthogonal to the sweep direction toward a side on which the second plate-shaped electrode is positioned.

6. The streak tube according to claim 5, further comprising:
an aperture electrode provided between the second slit member and the incident panel and including an opening through which the electrons pass,
wherein the second slit member is at the same potential as at least one of the aperture electrode and the first electrode.

7. The streak tube according to claim 1,
wherein the incident panel includes a light incident surface on which the light to be measured is incident and a photocathode forming surface that is positioned on a side opposite to the light incident surface and on which the photocathode is formed, and
the photocathode forming surface is formed in a curved shape recessed toward a side of the light incident surface.

8. The streak tube according to claim 1,
wherein the controller controls a potential applied to the sweep electrode, at a start of sweeping by the sweep electrode, to apply a positive potential to a first plate-shaped electrode, which is one of the pair of plate-shaped electrodes, and to apply a negative potential to a second plate-shaped electrode, which is the other of the pair of plate-shaped electrodes, and
a distance between an end portion closest to the incident panel in an inner side surface of the first plate-shaped electrode that faces a center plane passing through a center of the electron lens and orthogonal to the sweep direction and the center plane is shorter than a distance between an end portion closest to the incident panel in an inner side surface of the second plate-shaped electrode that faces the center plane and the center plane.

9. The streak tube according to claim 1,
wherein the pair of plate-shaped electrodes are traveling wave type electrodes configured such that the applied potential changes in synchronization with a traveling speed of the electrons between the pair of plate-shaped electrodes.

10. A streak tube comprising:
a container including an incident panel and an output panel;
a photocathode provided in the container and configured to emit electrons in response to light to be measured incident from the incident panel;
a sweep electrode provided in the container and including a pair of plate-shaped electrodes facing each other in a sweep direction along the output panel, the sweep electrode being configured to deflect the electrons in the sweep direction;
a plurality of electrodes provided between the photocathode and the sweep electrode and forming an electron lens that focuses the electrons, each of the plurality of electrodes being provided with an opening portion through which the electrons pass;
a controller configured to control a potential applied to the sweep electrode and a potential applied to at least one of the plurality of electrodes;
a first slit member provided between the electron lens and the sweep electrode and having a first slit having a width smaller than a width of the opening portion of each of the plurality of electrodes in the sweep direction; and
a second slit member provided between the electron lens and the incident panel and having a second slit having a width smaller than a width of the opening portion of each of the plurality of electrodes in the sweep direction,
wherein the controller controls a potential applied to the sweep electrode, at a start of sweeping by the sweep electrode, to apply a positive potential to a first plate-shaped electrode, which is one of the pair of plate-shaped electrodes, and to apply a negative potential to a second plate-shaped electrode, which is the other of the pair of plate-shaped electrodes,
a center of the first slit in the sweep direction is disposed at a position spaced apart from a center plane passing through a center of the electron lens and orthogonal to the sweep direction toward a side on which the first plate-shaped electrode is positioned, and
a center of the second slit in the sweep direction is disposed at a position spaced apart from the center plane toward a side on which the second plate-shaped electrode is positioned.
